# EUROPEAN PATENT APPLICATION

(11) **EP 4 401 491 A1**
(43) Date of publication of application: **17.07.2024**
(21) Application number: 22894985.5
(22) Date of filing: 21.11.2022
(51) Int. Cl.: H04W 72/04

(54) **COMMUNICATION METHOD AND COMMUNICATION APPARATUS**

(30) Priority: 22.11.2021 CN 202111387033
(71) Applicant: Huawei Technologies Co., Ltd., Shenzhen, Guangdong 518129 (CN)
(72) Inventor: WANG, Ting, Shenzhen, Guangdong 518129 (CN); LYU, Yongxia, Shenzhen, Guangdong 518129 (CN); WEI, Dongdong, Shenzhen, Guangdong 518129 (CN); MA, Jianglei, Shenzhen, Guangdong 518129 (CN)
(74) Representative: Körber, Martin Hans
(86) International application number: PCT/CN2022/133145
(87) International publication number: WO 2023/088456

(57) **Abstract**

The application provides a communication method and a communication apparatus. The communication method includes: A first communication apparatus determines a first resource. The first communication apparatus sends feedback information on the first resource, where the feedback information includes feedback information of at least two communication links, the at least two communication links include a first communication link and a second communication link, the first communication link is a communication link between the first communication apparatus and a second communication apparatus, and the second communication link is a communication link between the first communication apparatus and a third communication apparatus. According to technical solutions provided in the application, the first communication apparatus jointly and uniformly feeds back information about a plurality of communication links, so that communication latency can be reduced, signaling overheads can be reduced, and communication performance can be improved.

## Description

The application claims priority to Chinese Patent Application No. 202111387033.2, filed with the China National Intellectual Property Administration on November 22, 2021 and entitled "COMMUNICATION METHOD AND COMMUNICATION APPARATUS", which is incorporated herein by reference in its entirety.

### TECHNICAL FIELD

The application relates to the communication field, and more specifically, to a communication method and a communication apparatus.

### BACKGROUND

Ultra-reliable low-latency communication (ultra-reliability low latency communication, URLLC) is one of application scenarios of a 5th generation mobile communication technology (5th generation mobile communication technology, 5G), and is characterized by low latency and high reliability. URLLC scenarios are widely used, and different scenarios have different requirements on latency, reliability, and bandwidth. A requirement for low latency and high reliability in an industrial manufacturing scenario is the most challenging. However, a conventional technology cannot meet a URLLC requirement in a smart factory. A URLLC data packet may be configured in a grant-free manner, which belongs to semi-static configuration. In other words, grant-free spectral utilization efficiency is far lower than utilization efficiency that is based on a dynamic scheduling technology, and a quantity of users supported by each service area is limited. This cannot meet a requirement of a factory service in the future. Therefore, how to reduce communication latency, reduce communication signaling overheads, implement more flexible resource scheduling, and improve communication performance is an urgent problem to be resolved.

### SUMMARY

The application provides a communication method and a communication apparatus. When receiving information about a plurality of communication links, the communication apparatus uniformly feeds back the information about the plurality of communication links, to reduce communication latency, reduce signaling overheads, implement more flexible resource configuration, and improve communication performance.

According to a first aspect, a communication method is provided, including: A first communication apparatus determines a first resource. The first communication apparatus sends feedback information on the first resource, where the feedback information includes feedback information of at least two communication links, the at least two communication links include a first communication link and a second communication link, the first communication link is a communication link between the first communication apparatus and a second communication apparatus, and the second communication link is a communication link between the first communication apparatus and a third communication apparatus.

Optionally, for the first resource, the second communication apparatus may send configuration information, and the first communication apparatus determines the first resource based on the configuration information. For example, the configuration information may be sent by the second communication apparatus to the first communication apparatus, or may be sent by the second communication apparatus when the second communication apparatus sends data and/or a reference signal to the first communication apparatus.

Optionally, the second communication apparatus may send the configuration information to the first communication apparatus; or the second communication apparatus may send the configuration information to the third communication apparatus, and the third communication apparatus forwards the configuration information to the first communication apparatus.

Optionally, there may be one or more second communication apparatuses, and there may be one or more third communication apparatuses. A communication link is formed between each second communication apparatus and the first communication apparatus, and a communication link is formed between each third communication apparatus and the first communication apparatus.

Optionally, communication link types of the at least two communication links may be the same or may be different. When the second communication apparatus and the third communication apparatus are communication apparatuses of different types, the communication link types of the at least two communication links are different. When the second communication apparatus and the third communication apparatus are communication apparatuses of a same type, the link types of the at least two communication links are the same.

Optionally, the first communication apparatus sends the feedback information on the first resource, and all information included in the feedback information may be sent by using the first resource. In other words, the first communication apparatus uniformly sends the feedback information on the first resource. The feedback information includes information about at least two communication links, that is, the feedback information of the at least two communication links is uniformly sent.

Based on this solution, the first communication apparatus may send feedback information of a plurality of communication links on a same resource, so that communication latency can be reduced, signaling overheads can be reduced, unified feedback of the plurality of communication links can be implemented, resource configuration is more flexible, and communication performance is improved.

With reference to the first aspect, in a possible implementation, the first communication apparatus determines a sequence of information included in the feedback information.

Optionally, the feedback information is determined by the first communication apparatus based on received information about the at least two communication links. When determining the feedback information, the first communication apparatus needs to determine the sequence of the information included in the feedback information.

Based on this solution, a terminal device (the first communication apparatus) sorts the information included in the feedback information, and uniformly and simultaneously feeds back the information to a base station (the second communication apparatus), so that the base station performs unified scheduling, quickly determines a policy, and flexibly allocates resources.

With reference to the first aspect, in a possible implementation, before the first communication apparatus sends the feedback information on the first resource, the first communication apparatus receives information about the at least two communication links.

Optionally, the information received by the first communication apparatus includes information about the first communication link and information about the second communication link, or the information received by the first communication apparatus includes information about a plurality of first communication links, or the information received by the first communication apparatus includes information about a plurality of second communication links, or the information received by the first communication apparatus includes information about another communication link other than the first communication link and the second communication link.

Based on this solution, the first communication apparatus determines to uniformly send the feedback information of the plurality of communication links on the first resource, and the first communication apparatus can directly send the feedback information to the second communication apparatus without forwarding by the third communication apparatus. This reduces communication latency, reduces signaling overheads, implements more flexible resource configuration, and improves communication performance. In addition, the first communication apparatus determines a sequence of the feedback information, and sends the feedback information of the plurality of communication links in sequence, so that the second communication apparatus receives the feedback information and correctly obtains the feedback information of the plurality of communication links.

With reference to the first aspect, in a possible implementation, the sequence of the information included in the feedback information is determined based on at least one of the following information: first identifiers, priorities of link types, and time domain resources of information about the at least two communication links.

Optionally, the link types include but are not limited to a Uu link, a sidelink, a satellite link, a backhaul link, an access link, a relay link, and the like. Different types of links may be distinguished based on the priorities of the link types. The priority of the link type may be predefined in a protocol, or may be notified by a network device to a terminal device by using signaling. For example, priorities of the link types may be sorted as follows: the Uu link, the sidelink, the satellite link, the backhaul link, the access link, and the relay link.

Optionally, the sequence of the information included in the feedback information may be determined based on the first identifiers, may be determined based on both the first identifiers and the priorities of the link types, or may be determined based on the time domain resources of the information about the at least two communication links. For example, when first identifiers of the information included in the feedback information are different (that is, information included in each piece of feedback information is independently encoded and has an independent identifier), the first communication apparatus may determine, based on the first identifiers, information included in all the feedback information.

Based on this solution, in different communication scenarios, the sequence of the information included in the feedback information can be determined based on any one or more pieces of the foregoing information. After the first communication apparatus feeds back information in a specific sequence to the second communication apparatus, the second communication apparatus correctly interprets the feedback information, implements unified and flexible scheduling, quickly determines a policy, and flexibly allocates resources.

With reference to the first aspect, in a possible implementation, the first identifier includes at least one of the following identifiers: identifiers of the information about the at least two communication links, identifiers of the at least two communication links, an identifier of the second communication apparatus, an identifier of the third communication apparatus, and an identifier of a carrier.

Optionally, one communication link may have one or more carriers. The first communication apparatus may determine, based on the identifiers of the information about the at least two communication links, the sequence of the information included in the feedback information, or may determine, based on the identifiers of the information about the at least two communication links and the identifiers of the at least two communication links, the sequence of the information included in the feedback information.

Based on this solution, in different communication scenarios, the sequence of the information included in the feedback information can be determined based on different first identifiers. In other words, there are a plurality of methods for determining the sequence of the information included in the feedback information. This further ensures that the information included in the feedback information is sorted in sequence, so that the second communication apparatus correctly interprets the feedback information, implements unified and flexible scheduling, quickly determines a policy, and flexibly allocates resources.

With reference to the first aspect, in a possible implementation, when the first identifiers are the same, the sequence of the information included in the feedback information is determined based on the priorities of the link types and/or the time domain resources of the information about the at least two communication links. Alternatively, when the first identifiers and/or the priorities of the link types are the same, the sequence of the information included in the feedback information is determined based on the time domain resources of the information about the at least two communication links.

Optionally, when the first identifiers are the same, for example, identifiers of information about a Uu link are an identifier 0, an identifier 1, and an identifier 2, and identifiers of information about a sidelink are an identifier 0, an identifier 1, and an identifier 2, link identifiers of the Uu link and the sidelink are the same. When an accurate sequence cannot be determined based on a single identifier, the priorities of the link types may be used. When the Uu link is prior to the sidelink, a sequence of the information included in the feedback information may be determined as follows: feedback information of information with an identifier 0, feedback information of information with an identifier 1, feedback information of information with an identifier 2 in information about the Uu link, feedback information of information with an identifier 0, feedback information of information with an identifier 1, and feedback information of information with an identifier 2 in information about the sidelink.

Based on this solution, when the first identifiers are the same, the sequence of the information included in the feedback information may be determined based on the priorities of the communication links and/or the time domain resources of the information about the communication links, so that the network device performs unified scheduling, quickly determines a policy, flexibly allocates resources, and improves communication efficiency.

With reference to the first aspect, in a possible implementation, the sequence of the information included in the feedback information is determined based on a first sequence and the identifiers of the information about the at least two communication links, the first sequence is determined based on a second sequence and the identifiers of the at least two communication links, and the second sequence is determined based on the identifier of the carrier. Alternatively, the sequence of the information included in the feedback information is determined based on a first sequence and the identifiers of the information about the at least two communication links, the first sequence is determined based on a second sequence and the identifier of the carrier, and the second sequence is determined based on the identifiers of the at least two communication links.

Optionally, when the first identifiers are different, the first communication apparatus may determine, based on the first identifiers, the sequence of the information included in the feedback information. For example, the first communication apparatus first determines the second sequence based on the identifier of the carrier, then determines the first sequence based on the second sequence and the identifiers of the at least two communication links, and finally determines a final sequence based on the first sequence and the identifiers of the information about the at least two communication links. The final sequence is the sequence of the information included in the feedback information.

Optionally, when the first identifiers are different, the first communication apparatus may determine, based on the first identifiers, the sequence of the information included in the feedback information. For example, the first communication apparatus first determines the second sequence based on the identifiers of the at least two communication links, then determines the first sequence based on the second sequence and the identifier of the carrier, and finally determines a final sequence based on the first sequence and the identifiers of the information about the at least two communication links. The final sequence is the sequence of the information included in the feedback information.

Based on this solution, when the first identifiers are different, the sequence of the information included in the feedback information may be directly determined based on the different identifiers, and a specific step of determining the sequence may also be determined based on an actual communication situation, so that the network device performs unified scheduling, quickly determines a policy, flexibly allocates resources, and improves communication efficiency.

With reference to the first aspect, in a possible implementation, the information about the at least two communication links includes a first reference signal of the first communication link and a second reference signal of the second communication link, the feedback information includes channel state information, and the channel state information includes first channel state information determined based on the first reference signal and second channel state information determined based on the second reference signal; and/or the information about the at least two communication links includes first data of the first communication link and second data of the second communication link, the feedback information includes data response information, and the data response information includes first data response information of the first data and second data response information of the second data.

With reference to the first aspect, in a possible implementation, the feedback information includes a first information block and a second information block, the first channel state information and the second channel state information are located in the first information block, and the first data response information and the second data response information are located in the second information block. Alternatively, the feedback information includes a third information block and a fourth information block, the first channel state information and the first data response information are located in the third information block, and the second channel state information and the second data response information are located in the fourth information block.

Optionally, the first information block and the second information block are distinguished based on a type of the information included in the feedback information. In other words, the first information block is a channel state information block, and the second information block is a data response information block. The first communication apparatus may arrange all information in each information block based on a sequence according to the method described above.

Based on this solution, under the unified scheduling of the network device, different types of feedback information of the communication links can be quickly obtained. Channel state information of each communication link is first obtained, and then data response information of each communication link is obtained; or data response information of each communication link is first obtained, and then channel state information of each communication link is obtained, so that global coordinated scheduling or unified scheduling is quickly performed, and communication latency is reduced.

Optionally, the third information block and the third information block are distinguished based on types of communication links. In other words, the third information block may be a feedback information block of the information about the first communication link, and the second information block may be a feedback information block of the information about the second communication link. The first communication apparatus may arrange all information in each information block based on a sequence according to the method described above.

Based on this solution, under the unified scheduling of the network device, different types of feedback information of the communication links can be quickly obtained. Channel state information and data response information of the first communication link are first obtained, and then channel state information and data response information of the second communication link are obtained, so that global coordinated scheduling or unified scheduling is quickly performed, and communication latency is reduced.

According to a second aspect, a communication method is provided, including: A second communication apparatus determines a first resource. The second communication apparatus receives feedback information on the first resource, where the feedback information includes feedback information of at least two communication links, the at least two communication links include a first communication link and a second communication link, the first communication link is a communication link between the second communication apparatus and a first communication apparatus, and the second communication link is a communication link between the first communication apparatus and a third communication apparatus.

Optionally, the first resource may be determined by the second communication apparatus. The second communication apparatus may send configuration information to the first communication apparatus, and the first resource is carried in a configuration message. For example, the configuration information may be sent by the second communication apparatus, or may be sent by the second communication apparatus when the second communication apparatus sends data and/or a reference signal to the first communication apparatus.

Optionally, the second communication apparatus may send the configuration information to the first communication apparatus; or the second communication apparatus may send the configuration information to the third communication apparatus, and the third communication apparatus forwards the configuration information to the first communication apparatus.

Optionally, there may be one or more second communication apparatuses, and there may be one or more third communication apparatuses. A communication link is formed between each second communication apparatus and the first communication apparatus, and a communication link is formed between each third communication apparatus and the first communication apparatus.

Optionally, communication link types of the at least two communication links may be the same or may be different. When the second communication apparatus and the third communication apparatus are communication apparatuses of different types, the communication link types of the at least two communication links are different. When the second communication apparatus and the third communication apparatus are communication apparatuses of a same type, the link types of the at least two communication links are the same.

Optionally, the second communication apparatus receives the feedback information on the first resource, and all information included in the feedback information may be received by using the first resource. In other words, the second communication apparatus uniformly sends the feedback information on the first resource. The feedback information includes information about at least two communication links, that is, feedback information of the at least two communication links is uniformly sent.

Based on this solution, the second communication apparatus determines to uniformly receive the feedback information of the plurality of communication links on the first resource, and the second communication apparatus can directly obtain the feedback information sent by the first communication apparatus without forwarding by the third communication apparatus. This reduces communication latency, reduces signaling overheads, implements more flexible resource configuration, and improves communication performance.

With reference to the second aspect, in a possible implementation, before the second communication apparatus receives the feedback information on the first resource, the second communication apparatus sends information about the first communication link; and the second communication apparatus indicates the third communication apparatus to send information about the second communication link.

Optionally, the second communication apparatus may directly send the information about the communication link to the first communication apparatus, or may indirectly send the information about the communication link to the first communication apparatus, that is, indicate the third communication apparatus to send the information about the second communication link. The second communication apparatus may directly send the configuration information to the first communication apparatus, or may indirectly send the configuration information to the first communication apparatus. The second communication apparatus may simultaneously send the configuration information and the information about the communication link, or may not simultaneously send the configuration information and the information about the communication link.

Based on this solution, the second communication apparatus may directly or indirectly send information about the plurality of communication links, or may configure, for the first communication apparatus, a resource needed for transmitting the feedback information.

With reference to the second aspect, in a possible implementation, a sequence of information included in the feedback information is determined based on at least one of the following information: first identifiers, priorities of link types, and time domain resources of information about the at least two communication links.

Optionally, the link types include but are not limited to a Uu link, a sidelink, a satellite link, a backhaul link, an access link, a relay link, and the like. Different types of links may be distinguished based on the priorities of the link types. The priority of the link type may be predefined in a protocol, or may be notified by a network device to a terminal device by using signaling. For example, priorities of the link types may be sorted as follows: the Uu link, the sidelink, the satellite link, the backhaul link, the access link, and the relay link.

Optionally, the sequence of the information included in the feedback information may be determined based on the first identifiers, may be determined based on both the first identifiers and the priorities of the link types, or may be determined based on the time domain resources of the information about the at least two communication links. For example, when first identifiers of the information included in the feedback information are different (that is, information included in each piece of feedback information is independently encoded and has an independent identifier), the first communication apparatus may determine, based on the first identifiers, information included in all the feedback information.

Based on this solution, in different communication scenarios, the sequence of the information included in the feedback information can be determined based on any one or more pieces of the foregoing information. After the first communication apparatus feeds back information in a specific sequence to the second communication apparatus, the second communication apparatus correctly interprets the feedback information, implements unified and flexible scheduling, quickly determines a policy, and flexibly allocates resources.

With reference to the second aspect, in a possible implementation, the first identifier includes at least one of the following identifiers: identifiers of the information about the at least two communication links, identifiers of the at least two communication links, an identifier of the second communication apparatus, an identifier of the third communication apparatus, and an identifier of a carrier.

Optionally, one communication link may have one or more carriers. The first communication apparatus may determine, based on the identifiers of the information about the at least two communication links, the sequence of the information included in the feedback information, or may determine, based on the identifiers of the information about the at least two communication links and the identifiers of the at least two communication links, the sequence of the information included in the feedback information.

Based on this solution, in different communication scenarios, the sequence of the information included in the feedback information can be determined based on different first identifiers. In other words, there are a plurality of methods for determining the sequence of the information included in the feedback information. This further ensures that the information included in the feedback information is sorted in sequence, so that the second communication apparatus correctly interprets the feedback information, implements unified and flexible scheduling, quickly determines a policy, and flexibly allocates resources.

With reference to the second aspect, in a possible implementation, that a sequence of information included in the feedback information is determined based on at least one of the following information includes: When the first identifiers are the same, the sequence of the information included in the feedback information is determined based on the priorities of the link types and/or the time domain resources of the information about the at least two communication links. Alternatively, when the first identifiers and/or the priorities of the link types are the same, the sequence of the information included in the feedback information is determined based on the time domain resources of the information about the at least two communication links.

Optionally, when the first identifiers are the same, for example, identifiers of information about a Uu link are an identifier 0, an identifier 1, and an identifier 2, and identifiers of information about a sidelink are an identifier 0, an identifier 1, and an identifier 2, link identifiers of the Uu link and the sidelink are the same. When an accurate sequence cannot be determined based on a single identifier, the priorities of the link types may be used. When the Uu link is prior to the sidelink, a sequence of the information included in the feedback information may be determined as follows: feedback information of information with an identifier 0, feedback information of information with an identifier 1, feedback information of information with an identifier 2 in information about the Uu link, feedback information of information with an identifier 0, feedback information of information with an identifier 1, and feedback information of information with an identifier 2 in information about the sidelink.

Based on this solution, when the first identifiers are the same, it is difficult to determine the sequence of the information included in the feedback information only by using the first identifier. In this case, the sequence of the information included in the feedback information may be determined based on the priorities of the communication links and/or the time domain resources of the information about the communication links, so that the network device performs unified scheduling, quickly determines a policy, flexibly allocates resources, and improves communication efficiency.

With reference to the second aspect, in a possible implementation, the sequence of the information included in the feedback information is determined based on a first sequence and the identifiers of the information about the at least two communication links, the first sequence is determined based on a second sequence and the identifiers of the at least two communication links, and the second sequence is determined based on the identifier of the carrier. Alternatively, the sequence of the information included in the feedback information is determined based on a first sequence and the identifiers of the information about the at least two communication links, the first sequence is determined based on a second sequence and the identifier of the carrier, and the second sequence is determined based on the identifiers of the at least two communication links.

Optionally, when the first identifiers are different, the first communication apparatus may determine, based on the first identifiers, the sequence of the information included in the feedback information. For example, the first communication apparatus first determines the second sequence based on the identifier of the carrier, then determines the first sequence based on the second sequence and the identifiers of the at least two communication links, and finally determines a final sequence based on the first sequence and the identifiers of the information about the at least two communication links. The final sequence is the sequence of the information included in the feedback information. For another example, the first communication apparatus first determines the second sequence based on the identifiers of the at least two communication links, then determines the first sequence based on the second sequence and the identifier of the carrier, and finally determines a final sequence based on the first sequence and the identifiers of the information about the at least two communication links. The final sequence is the sequence of the information included in the feedback information.

Based on this solution, when the first identifiers are different, the sequence of the information included in the feedback information may be directly determined based on the different identifiers, and a specific step of determining the sequence may also be determined based on an actual communication situation, so that the network device performs unified scheduling, quickly determines a policy, flexibly allocates resources, and improves communication efficiency.

With reference to the second aspect, in a possible implementation, the information about the at least two communication links includes a first reference signal of the first communication link and a second reference signal of the second communication link, the feedback information includes channel state information, and the channel state information includes first channel state information determined based on the first reference signal and second channel state information determined based on the second reference signal; and/or the information about the at least two communication links includes first data of the first communication link and second data of the second communication link, the feedback information includes data response information, and the data response information includes first data response information of the first data and second data response information of the second data.

With reference to the second aspect, in a possible implementation, the feedback information includes a first information block and a second information block, the first channel state information and the second channel state information are located in the first information block, and the first data response information and the second data response information are located in the second information block. Alternatively, the feedback information includes a third information block and a fourth information block, the first channel state information and the first data response information are located in the third information block, and the second channel state information and the second data response information are located in the fourth information block.

Optionally, the first information block and the second information block are distinguished based on a type of the information included in the feedback information. In other words, the first information block is a channel state information block, and the second information block is a data response information block. The first communication apparatus may arrange all information in each information block based on a sequence according to the method described above.

Based on this solution, under the unified scheduling of the network device, different types of feedback information of the communication links can be quickly obtained. Channel state information of each communication link is first obtained, and then data response information of each communication link is obtained; or data response information of each communication link is first obtained, and then channel state information of each communication link is obtained, so that global coordinated scheduling or unified scheduling is quickly performed, and communication latency is reduced.

Optionally, the third information block and the third information block are distinguished based on types of communication links. In other words, the third information block may be a feedback information block of the information about the first communication link, and the second information block may be a feedback information block of the information about the second communication link. The first communication apparatus may arrange all information in each information block based on a sequence according to the method described above.

Based on this solution, under the unified scheduling of the network device, different types of feedback information of the communication links can be quickly obtained. Channel state information and data response information of the first communication link are first obtained, and then channel state information and data response information of the second communication link are obtained, so that global coordinated scheduling or unified scheduling is quickly performed, and communication latency is reduced.

According to a third aspect, a communication apparatus is provided, including: a processing unit, configured to determine a first resource; and a transceiver unit, configured to send feedback information on the first resource, where the feedback information includes feedback information of at least two communication links, the at least two communication links include a first communication link and a second communication link, the first communication link is a communication link between a first communication apparatus and a second communication apparatus, and the second communication link is a communication link between the first communication apparatus and a third communication apparatus.

Optionally, the communication apparatus may be a terminal device, or may be a chip in the terminal device. The communication apparatus has a function of implementing the first aspect and the possible implementations. The function may be implemented by hardware, or may be implemented by hardware executing corresponding software. The hardware or the software includes one or more units corresponding to the function.

In a possible design, the communication apparatus includes the processing unit and the transceiver unit. The transceiver unit may be, for example, at least one of a transceiver or a receiver, and the transceiver unit may include a radio frequency circuit or an antenna. The processing unit may be a processor. In this design, the communication apparatus may be a terminal device.

Optionally, the communication apparatus further includes a storage unit, and the storage unit may be, for example, a memory. When a storage unit is included, the storage unit is configured to store instructions. The processing unit is connected to the storage unit. The processing unit may execute the instructions stored in the storage unit or instructions from another unit, so that the communication apparatus performs the communication method according to the first aspect and the possible implementations.

In another possible design, when the communication apparatus is a chip, the chip includes a processing unit and a transceiver unit. The processing unit may be, for example, a processor. The transceiver unit may be, for example, an input/output interface, a pin, or a circuit on the chip. The processing unit may execute instructions, so that the chip in the terminal device performs the communication method according to the first aspect and any possible implementation.

Optionally, the processing unit may execute instructions in a storage unit, and the storage unit may be a storage unit, for example, a register or a cache, in the chip. The storage unit may alternatively be located inside the terminal device, but is located outside the chip.

Any processor mentioned above may be a central processing unit (central processing unit, CPU), a microprocessor, an application-specific integrated circuit (application-specific integrated circuit, ASIC), or one or more integrated circuits for controlling program execution of the communication method according to the first aspect.

With reference to the third aspect, in a possible implementation, the processing unit is further configured to determine a sequence of information included in the feedback information.

With reference to the third aspect, in a possible implementation, before the transceiver unit sends the feedback information on the first resource, the transceiver unit is further configured to receive information about the at least two communication links.

With reference to the third aspect, in a possible implementation, the sequence of the information included in the feedback information is determined based on at least one of the following information: first identifiers, priorities of link types, and time domain resources of information about the at least two communication links.

With reference to the third aspect, in a possible implementation, the first identifier includes at least one of the following identifiers: identifiers of the information about the at least two communication links, identifiers of the at least two communication links, an identifier of the second communication apparatus, an identifier of the third communication apparatus, and an identifier of a carrier.

With reference to the third aspect, in a possible implementation, that the sequence of the information included in the feedback information is determined based on at least one of the following information includes: When the first identifiers are the same, the sequence of the information included in the feedback information is determined based on the priorities of the link types and/or the time domain resources of the information about the at least two communication links. Alternatively, when the first identifiers and/or the priorities of the link types are the same, the sequence of the information included in the feedback information is determined based on the time domain resources of the information about the at least two communication links.

With reference to the third aspect, in a possible implementation, the sequence of the information included in the feedback information is determined based on a first sequence and the identifiers of the information about the at least two communication links, the first sequence is determined based on a second sequence and the identifiers of the at least two communication links, and the second sequence is determined based on the identifier of the carrier. Alternatively, the sequence of the information included in the feedback information is determined based on a first sequence and the identifiers of the information about the at least two communication links, the first sequence is determined based on a second sequence and the identifier of the carrier, and the second sequence is determined based on the identifiers of the at least two communication links.

With reference to the third aspect, in a possible implementation, the information about the at least two communication links includes a first reference signal of the first communication link and a second reference signal of the second communication link, the feedback information includes channel state information, and the channel state information includes first channel state information determined based on the first reference signal and second channel state information determined based on the second reference signal; and/or the information about the at least two communication links includes first data of the first communication link and second data of the second communication link, the feedback information includes data response information, and the data response information includes first data response information of the first data and second data response information of the second data.

With reference to the third aspect, in a possible implementation, the feedback information includes a first information block and a second information block, the first channel state information and the second channel state information are located in the first information block, and the first data response information and the second data response information are located in the second information block. Alternatively, the feedback information includes a third information block and a fourth information block, the first channel state information and the first data response information are located in the third information block, and the second channel state information and the second data response information are located in the fourth information block.

According to a fourth aspect, a communication apparatus is provided, including: a processing unit, configured to determine a first resource; and a transceiver unit, configured to receive feedback information on the first resource, where the feedback information includes feedback information of at least two communication links, the at least two communication links include a first communication link and a second communication link, the first communication link is a communication link between a second communication apparatus and a first communication apparatus, and the second communication link is a communication link between the first communication apparatus and a third communication apparatus.

Optionally, the communication apparatus may be a network device, or may be a chip in a base station. The communication apparatus has a function of implementing the second aspect and the possible implementations. The function may be implemented by hardware, or may be implemented by hardware executing corresponding software. The hardware or the software includes one or more units corresponding to the function.

In a possible design, the communication apparatus includes the processing unit and the transceiver unit. The transceiver unit may be, for example, at least one of a transceiver or a receiver, and the transceiver unit may include a radio frequency circuit or an antenna. The processing unit may be a processor. In this design, the communication apparatus may be a base station.

Optionally, the communication apparatus further includes a storage unit, and the storage unit may be, for example, a memory. When a storage unit is included, the storage unit is configured to store instructions. The processing unit is connected to the storage unit. The processing unit may execute the instructions stored in the storage unit or instructions from another unit, so that the communication apparatus performs the communication method according to the second aspect and the possible implementations.

In another possible design, when the communication apparatus is a chip, the chip includes a processing unit and a transceiver unit. The processing unit may be, for example, a processor. The transceiver unit may be, for example, an input/output interface, a pin, or a circuit on the chip. The processing unit may execute instructions, so that the chip in the terminal device performs the communication method according to the second aspect and any possible implementation.

Optionally, the processing unit may execute instructions in a storage unit, and the storage unit may be a storage unit, for example, a register or a cache, in the chip. The storage unit may alternatively be located inside the terminal device, but is located outside the chip.

Any processor mentioned above may be a CPU, a microprocessor, an ASIC, or one or more integrated circuits for controlling program execution of the communication method according to the first aspect.

With reference to the fourth aspect, in a possible implementation, before the transceiver unit receives the feedback information on the first resource, the transceiver unit is further configured to send information about the first communication link; and the transceiver unit is further configured to indicate the third communication apparatus to send information about the second communication link.

With reference to the fourth aspect, in a possible implementation, a sequence of information included in the feedback information is determined based on at least one of the following information: first identifiers, priorities of link types, and time domain resources of information about the at least two communication links.

With reference to the fourth aspect, in a possible implementation, the first identifier includes at least one of the following identifiers: identifiers of the information about the at least two communication links, identifiers of the at least two communication links, an identifier of the second communication apparatus, an identifier of the third communication apparatus, and an identifier of a carrier.

With reference to the fourth aspect, in a possible implementation, that a sequence of information included in the feedback information is determined based on at least one of the following information includes: When the first identifiers are the same, the sequence of the information included in the feedback information is determined based on the priorities of the link types and/or the time domain resources of the information about the at least two communication links. Alternatively, when the first identifiers and/or the priorities of the link types are the same, the sequence of the information included in the feedback information is determined based on the time domain resources of the information about the at least two communication links.

With reference to the fourth aspect, in a possible implementation, the sequence of the information included in the feedback information is determined based on a first sequence and the identifiers of the information about the at least two communication links, the first sequence is determined based on a second sequence and the identifiers of the at least two communication links, and the second sequence is determined based on the identifier of the carrier. Alternatively, the sequence of the information included in the feedback information is determined based on a first sequence and the identifiers of the information about the at least two communication links, the first sequence is determined based on a second sequence and the identifier of the carrier, and the second sequence is determined based on the identifiers of the at least two communication links.

With reference to the fourth aspect, in a possible implementation, the information about the at least two communication links includes a first reference signal of the first communication link and a second reference signal of the second communication link, the feedback information includes channel state information, and the channel state information includes first channel state information determined based on the first reference signal and second channel state information determined based on the second reference signal; and/or the information about the at least two communication links includes first data of the first communication link and second data of the second communication link, the feedback information includes data response information, and the data response information includes first data response information of the first data and second data response information of the second data.

With reference to the fourth aspect, in a possible implementation, the feedback information includes a first information block and a second information block, the first channel state information and the second channel state information are located in the first information block, and the first data response information and the second data response information are located in the second information block. Alternatively, the feedback information includes a third information block and a fourth information block, the first channel state information and the first data response information are located in the third information block, and the second channel state information and the second data response information are located in the fourth information block.

According to a fifth aspect, a communication apparatus is provided. The communication apparatus includes a processor coupled to a memory. The memory is configured to store a computer program, and the processor is configured to run the computer program, to enable the communication apparatus to perform any one of the first aspect to the second aspect or the possible implementations of the first aspect to the second aspect.

With reference to the fifth aspect, in a possible implementation, the communication apparatus further includes one or more of the memory and a transceiver, and the transceiver is configured to receive a signal and/or generate a signal.

According to a sixth aspect, a computer-readable storage medium is provided. The computer-readable storage medium includes a computer program or instructions. When the computer program or the instructions are run on a computer, the method according to any one of the first aspect and the possible implementations of the first aspect is performed, or the method according to any one of the second aspect and the possible implementations of the second aspect is performed.

According to a seventh aspect, a computer program product is provided. The computer program product includes a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program is provided. When the computer program is run on a computer, the method according to any one of the first aspect and the possible implementations of the first aspect is performed, or the method according to any one of the second aspect and the possible implementations of the second aspect is performed.

According to a ninth aspect, a communication system is provided, including the communication apparatus according to any one of the third aspect and the possible implementations of the third aspect and the communication apparatus according to any one of the fourth aspect and the possible implementations of the fourth aspect.

### BRIEF DESCRIPTION OF DRAWINGS

FIG. 1 is a schematic diagram of a two-layer communication structure;
FIG. 2 is a schematic interaction diagram of a communication method according to an embodiment of the application;
FIG. 3 is a schematic interaction diagram of a communication method according to another embodiment of the application;
FIG. 4 is a schematic diagram of a scenario of a two-layer communication structure to which an embodiment of the application is applicable;
FIG. 5 is a schematic diagram of a satellite communication scenario to which an embodiment of the application is applicable;
FIG. 6 is a schematic diagram of an integrated access and backhaul communication scenario to which an embodiment of the application is applicable;
FIG. 7 is a schematic diagram of an information block according to an embodiment of the application;
FIG. 8 is a schematic diagram of sorting of information included in feedback information according to an embodiment of the application;
FIG. 9 is a schematic diagram of an indication of a communication link according to the application;
FIG. 10 is a schematic diagram of an index indication of an information block according to the application;
FIG. 11 is a schematic diagram of a multi-carrier, multi-communication link, and multi-data communication feedback method according to the application;
FIG. 12 is a schematic diagram of another multi-carrier, multi-communication link, and multi-data communication feedback method according to the application;
FIG. 13 is a schematic interaction diagram of a communication method according to another embodiment of the application;
FIG. 14 is a schematic interaction diagram of a reference signal according to an embodiment of the application;
FIG. 15 is a schematic flowchart of a communication method according to an embodiment of the application;
FIG. 16 is a schematic flowchart of another communication method according to an embodiment of the application;
FIG. 17 is a schematic flowchart of another communication method according to an embodiment of the application;
FIG. 18 is an example diagram of a structure of a communication apparatus according to an embodiment of the application;
FIG. 19 is an example diagram of a structure of a communication apparatus according to another embodiment of the application; and
FIG. 20 is an example diagram of a structure of an apparatus according to an embodiment of the application.

### DESCRIPTION OF EMBODIMENTS

The following describes technical solutions in embodiments in the application with reference to accompanying drawings.

The technical solutions in embodiments of the application may be applied to various communication systems, for example, a long term evolution (long term evolution, LTE) system, an LTE frequency division duplex (frequency division duplex, FDD) system, an LTE time division duplex (time division duplex, TDD), a 5th generation (5th generation, 5G) system, a new radio (new radio, NR), or a communication system evolved after 5G (for example, a 6G communication system). The technical solutions in embodiments of the application may be further applied to a non-terrestrial network (non-terrestrial network, NTN) communication system such as a satellite communication system. The NTN communication system may be integrated with a wireless communication system. The technical solutions in embodiments of the application may be further applied to an inter-satellite link communication system, a wireless projection system, a virtual reality (virtual reality, VR) communication system, an integrated access and backhaul (integrated access and backhaul, IAB) system, a wireless fidelity (wireless fidelity, Wi-Fi) communication system, an optical communication system, and the like. This is not limited herein.

A terminal device in embodiments of the application may be a device, for example, a terminal or a chip that may be used in the terminal, configured to implement a wireless communication function. The terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a VR terminal device, an augmented reality (augmented reality, AR) terminal device, a wireless terminal in industrial control (industrial control), a wireless terminal in self driving (self-driving), an uncrewed aerial vehicle, a sensor, an actuator, a satellite terminal, a wireless terminal in a telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal (for example, an internet of vehicles device) in vehicle-to-everything (vehicle-to-everything, V2X), a terminal in device-to-device (Device-to-Device) communication, a terminal in machine-to-machine (machine-to-machine, M2M) communication, a terminal device in a 5G network, a terminal device in a communication system evolved after 5G, a terminal device in a future evolved public land mobile network (public land mobile network, PLMN), or the like. This is not limited in embodiments of the application.

A network device in embodiments of the application may be a device configured to communicate with the terminal device, or may be a device that connects the terminal device to a wireless network. The network device may be a node in a radio access network, or may be referred to as a base station, or may be referred to as a radio access network (radio access network, RAN) node (or device). The network device may be a distributed antenna system, and a radio frequency head end of a base station may communicate with a terminal device. For example, the network device may include an evolved NodeB (evolved NodeB, eNB, or eNodeB) in an LTE system or an evolved LTE system (LTE-Advanced, LTE-A), for example, a conventional macro base station eNB and a micro base station eNB in a heterogeneous network scenario; or may include a next generation NodeB (next generation NodeB, gNB) in a 5G NR system, or may further include a transmission reception point (transmission reception point, TRP), a transmission point (transmitting point, TP), a home base station (for example, home evolved NodeB, or home NodeB, HNB), a base band unit (base band unit, BBU), a baseband pool BBU pool, a Wi-Fi access point (access point, AP), a mobile switching center and a device that undertakes a base station function in device-to-device (device-to-device, D2D), vehicle-to-everything (vehicle-to-everything, V2X), or machine-to-machine (machine-to-machine, M2M) communication, or a base station device in a 5G network or a network device in a future evolved PLMN. Alternatively, the network device may be a wearable device, a vehicle-mounted device, or the like; or may include a central unit (centralized unit, CU) and a distributed unit (distributed unit, DU) in a cloud radio access network (cloud radio access network, C-RAN) system; or may include a network device in an NTN, that is, may be deployed on a high-altitude platform or a satellite. In the NTN, the network device may be used as a layer 1 (L1) relay (relay), or may be used as a base station, or may be used as a DU, or may be used as an IAB node. This is not limited in embodiments of the application. Certainly, the network device may alternatively be a node in a core network.

Optionally, in embodiments of the application, the network device and the terminal device may be deployed on the land, including an indoor device, an outdoor device, a handheld device, or a vehicle-mounted device; may be deployed on the water; or may be deployed on an airplane, a balloon, and a satellite in the air. An application scenario of the network device and the terminal device is not limited in embodiments of the application.

URLLC is one of three primary application scenarios of 5G and is a typical scenario that distinguishes 5G from 2G/3G/4G. As a breakthrough in a vertical industry of a mobile communication industry, URLLC is critical for wide application in fields such as autonomous driving, industrial manufacturing, internet of vehicles, and smart grid, and is enhanced in a 3GPP NR R16 phrase. A URLLC scenario features low latency and high reliability. URLLC scenarios are widely used, and different scenarios have different requirements on latency, reliability, and bandwidth. Specifically, at least a "telemetry, remote communication, and remote control" scenario of power automation, a vehicle-to-everything scenario, and an industrial manufacturing scenario are included. A requirement for low latency and high reliability in a smart industrial manufacturing scenario is the most challenging. The following mainly describes the industrial manufacturing scenario, but does not mean that the application is not applicable to another scenario with a URLLC requirement. The application is also applicable to a service scenario with a requirement for low latency and high reliability. The application is also applicable to a communication scenario with another service requirement.

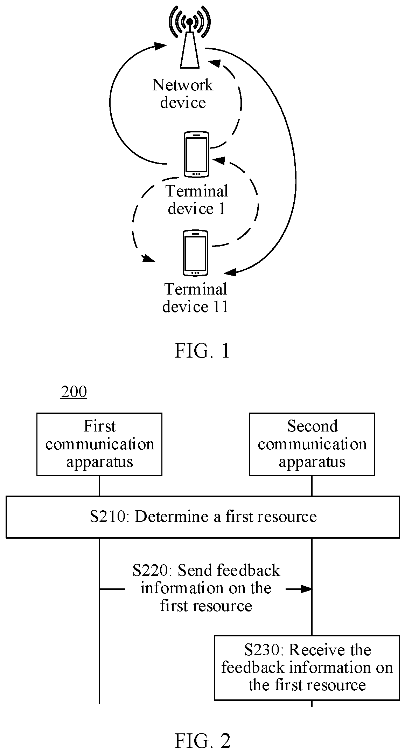

Manufacturing devices in a smart factory connect to an enterprise cloud or an onsite control system through a mobile communication system, to collect onsite environment data and production data, and analyze a production status in real time. An entire production line is unmanned and wireless. Smart industrial manufacturing has high requirements on technical performance, and high-end manufacturing has very high requirements on latency and stability of workshop equipment. In an actual industrial scenario, a two-layer structure is generally used for deployment. For example, a network device, a controller, and a bottom device are included. The controller may be a transmit end device, and the bottom device may be a receive end device. Different devices need to communicate with each other through different communication links. As shown in FIG. 1, to implement communication between a controller terminal device 1 and a bottom device terminal device 11, the terminal device 1 needs to communicate with a network device, and the network device then communicates with the terminal device 11. Consequently, long latency is caused. To obtain channel information of the controller terminal device 1 and the low-end device terminal device 11, the terminal device 1 sends a channel control status information-reference signal (channel control status information-reference signal, CSI-RS), and the terminal device 11 obtains a channel by receiving the CSI-RS, and feeds back the channel information to the terminal device 1. If the network device needs to obtain transmission control information (for example, channel state information CSI and/or hybrid automatic repeat request-acknowledgment (hybrid automatic repeat request-acknowledgment, HARQ-ACK) information), the terminal device 1 sends the received CSI/HARQ-ACK to the network device. Consequently, the long latency is caused. It should be understood that names of the controller terminal device 1 and the bottom device terminal device 11 do not limit functions of the controller terminal device 1 and the bottom device terminal device 11. Any terminal device 1 and terminal device 11 that implement the foregoing functions are applicable to a scenario shown in FIG. 1.

The current 5G technology can support services of a maximum of 20 users in a same service area. In other words, currently, services of 50 users in a same service area cannot be met, that is, URLLC requirements in intelligent engineering cannot be met. As a result, response cases, service workshops, areas, and the like in intelligent work cannot be automated and wireless. Specifically, in most scenarios, HARQ transmission can be completed only once within 1 ms, and this means that an initial block error rate (block error rate, BLER) should be set to 99.9999%. Even if first transmission of a URLLC data packet is based on a grant-free configuration manner, and retransmission is performed in a scheduling manner, because time frequency resources in a grant-free configuration technology are configured at a radio resource control (radio resource control, RRC) layer that is a higher layer, and are semi-statically configured, a current dynamic radio channel of a user cannot be matched. In other words, spectral utilization efficiency of the grant-free technology is far lower than that of a dynamic scheduling technology. However, because a UE processing capability supports only one time of HARQ transmission, and the initial transmission BLER is set to a large value, the HARQ spectral efficiency is also low. As a result, 50 users in each service area cannot be supported. The UE processing capability is the quickest processing capability that can be supported by the UE in a framework (where an enhanced mobile broadband eMBB service is mainly considered) designed based on the current NR system.

Therefore, to resolve the foregoing technical problem, the application provides a communication method and a communication apparatus. In a scenario in which low latency, high efficiency, and a plurality of communication links are needed, a unified communication method is set for the plurality of communication links, to further reduce communication latency of the plurality of communication links, effectively increase a quantity of served terminals, and improve communication efficiency of the plurality of communication links.

It should be understood that the method claimed in the application may be applicable to communication of a plurality of types of communication links. For example, as shown in FIG. 1, when the network device communicates with the terminal device 11, Uu communication, that is, communication between the network device and the terminal device, is included. The network device sends downlink data to the terminal. After receiving the downlink data, the terminal may feed back a HARQ-ACK, and may feed back the HARQ-ACK on a physical uplink control channel (physical uplink control channel, PUCCH) or a physical uplink shared channel (physical uplink shared channel, PUSCH). The network device may send a CSI-RS to the terminal to measure channel state information, and the terminal may feed back the CSI on the PUCCH or the PUSCH. The HARQ-ACK and the channel state information (channel state information, CSI) may be jointly fed back.

In FIG. 1, communication between the terminal device 11 (which may be referred to as a bottom device) and the terminal device 1 (which may be referred to as a controller) needs to be implemented through a sidelink (sidelink). For sidelink communication, there are two communication modes. A physical sidelink feedback control channel (physical sidelink feedback control channel, PSFCH) is introduced, and HARQ-ACK information may be carried. CSI measurement feedback is that a transmit end indicates CSI-RS information in sidelink control information (sidelink control information, SCI), and the CSI-RS is sent with data. A receive end feeds back the CSI by using a media access control control element (MAC control element, MAC CE). The network device indicates only a resource pool, and the transmit end indicates the SCI. The SCI may include a CSI request, and the CSI-RS is sent with sidelink data. The CSI request indicates the terminal device 1 to send the CSI-RS when sending data again, and the terminal device 11 may receive the CSI-RS, to obtain channel information. The receive end sends transmission control information (transmission control information, TxCI) (including the CSI, the HARQ-ACK, and the like) to the transmit end. Communication latency between terminals in current TxCI transmission is high, and requirements for low latency and low power consumption cannot be met. In addition, semi-static resource configuration mode of the network device causes inflexible resource application and cannot meet a requirement in a scenario in which a large quantity of users are connected in a factory.

For example, for sidelink transmission, the network device may indicate a sidelink slot (sidelink slot, SL slot). Optionally, an uplink slot, a downlink slot, and a sidelink slot are semi-statically configured in a time division manner. Consequently, resource usage is not flexible enough. For a backhaul link (backhaul link) and an access link (access link), optionally, IAB includes an IAB donor (IAB Donor), an IAB node (IAB node), and user equipment. A communication link between the IAB Donor and the IAB node is a backhaul link, and a communication link between the user equipment and the IAB node is an access link. A time division multiplexing manner is used for the backhaul link and the access link use. For example, a backhaul slot or an access slot is semi-statically configured. Consequently, resource usage is not flexible.

For example, the communication method and the communication apparatus in the application may be used in wireless projection. Typical application scenarios include wireless projection, VR games, book encoding and decoding in mobile phone software, and the like.

For example, the communication method and the communication apparatus in the application may be used in low-frequency communication, or may be used in high-frequency communication, or may be used in terahertz communication, or the like. This is not limited in the application.

The communication method in embodiments may be used for communication of various types of communication links. It should be understood that communication links may be communication links of different link types, for example, a Uu link and a sidelink, or may be communication links of a same link type, for example, a plurality of sidelinks. This is not limited in the application. The following describes technical solutions of the application in detail by using a communication link between a base station and a terminal device and a communication link between terminal devices as examples.

FIG. 2 is a schematic flowchart of a communication method 200 according to the application. According to the method 200, a first communication apparatus can perform joint and unified feedback on information of a plurality of communication links on a determined first resource. The feedback information may indicate channel state information and/or data response information, and the feedback information includes at least information about two communication links. It should be understood that the first communication apparatus includes but is not limited to a terminal device, a second communication apparatus includes but is not limited to a network device, and a third communication apparatus includes but is not limited to a terminal device. The network device and the terminal device may form a communication pair, and the terminal device and the terminal device may also form a communication pair. Refer to FIG. 2. For example, the first communication apparatus is a terminal device, the second communication apparatus is a network device, the third communication apparatus is a terminal, a first communication link is a communication link (a Uu communication link) between the first communication apparatus and the second communication apparatus, and a second communication link is a communication link (a sidelink communication link) between the first communication apparatus and the third communication apparatus. The following describes steps.

S210: Determine the first resource.

The first communication apparatus and the second communication apparatus determine the first resource. The first communication apparatus may be a terminal device, and a quantity of first communication apparatuses is not limited herein. The second communication apparatus may be a network device, and a quantity of second communication apparatuses is not limited herein.

It should be understood that, for the first resource, the second communication apparatus may send configuration information, and the first communication apparatus determines the first resource based on the configuration information. For example, the configuration information may be specifically sent by the second communication apparatus to the first communication apparatus, or may be sent by the second communication apparatus when the second communication apparatus sends data and/or a reference signal to the first communication apparatus. This is not limited in the embodiment of the application.

For example, the second communication apparatus may directly send the configuration information to the first communication apparatus, or the second communication apparatus may send the configuration information to the third communication apparatus, and the third communication apparatus forwards the configuration information to the first communication apparatus. A manner in which the first communication apparatus obtains the first resource is not limited in the embodiment of the application.

S220: The first communication apparatus sends feedback information on the first resource.

S230: The second communication apparatus receives the feedback information on the first resource.

The first communication apparatus sends the feedback information on the first resource, and the second communication apparatus receives the feedback information on the first resource. The feedback information includes feedback information of at least two communication links, and the at least two communication links include the first communication link and the second communication link. A communication link between the first communication apparatus and the second communication apparatus is the first communication link, and a communication link between the first communication apparatus and the third communication apparatus is the second communication link.

The feedback information may include channel state information and/or data response information. The channel state information is obtained based on a reference signal of each communication link, and the data response information is obtained based on data of each communication link.

There may be one or more second communication apparatuses, and there may be one or more third communication apparatuses. A communication link is formed between each second communication apparatus and the first communication apparatus, and a communication link is formed between each third communication apparatus and the first communication apparatus.

Communication link types of the at least two communication links may be the same or may be different. This is not limited in the embodiment of the application. When the second communication apparatus and the third communication apparatus are communication apparatuses of different types, the communication link types of the at least two communication links are different. When the second communication apparatus and the third communication apparatus are communication apparatuses of a same type, the link types of the at least two communication links are the same.

The first communication apparatus sends the feedback information on the first resource, and all information included in the feedback information may be sent by using the first resource. In other words, the first communication apparatus uniformly sends the feedback information on the first resource. The feedback information includes the feedback information of the at least two communication links, that is, the feedback information of the at least two communication links is uniformly sent.

It should be understood that the second communication apparatus may be an apparatus for sending a reference signal and/or data, or may be a third-party apparatus other than an apparatus for sending a reference signal and/or data and a device for receiving a reference signal and/or data. This is not limited in the embodiment of the application.

Based on this solution, according to the communication method provided in the application, the first communication apparatus and the second communication apparatus perform transmission of the feedback information on the determined resource, and the first communication apparatus can uniformly send the feedback information of the plurality of communication links to the second communication apparatus on the first resource. In addition, the feedback information does not need to be forwarded by the third communication apparatus during transmission, so that latency can be effectively reduced, communication signaling overheads can be reduced, and communication performance can be improved.

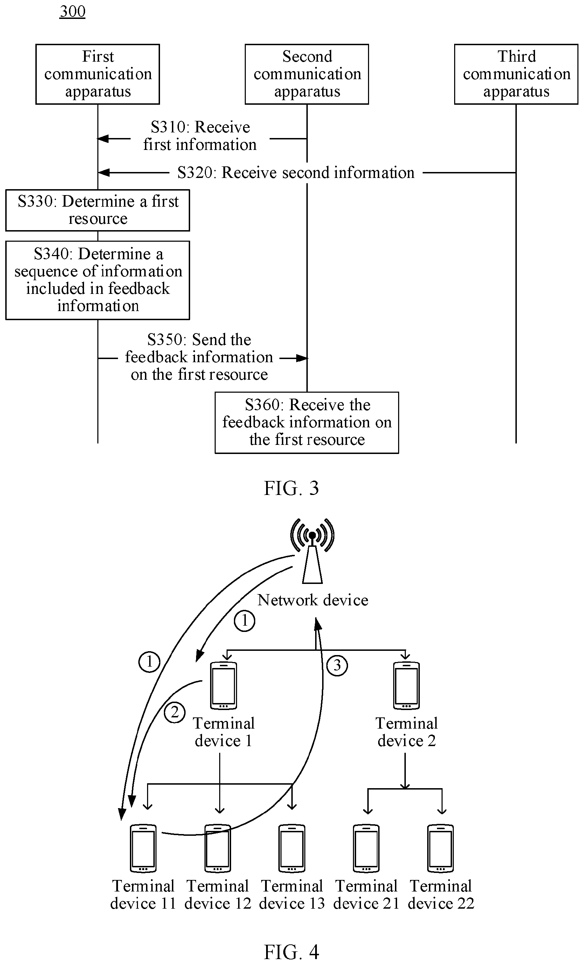

FIG. 3 is a schematic flowchart of another communication method 300 according to the application. According to the method 300, a first communication apparatus can further determine a sequence of feedback information, and uniformly and jointly feed back feedback information of a plurality of links in a specific sequence, so that communication latency can be reduced, and signaling overheads can be reduced. The following describes steps in detail.

S310: The first communication apparatus receives first information, and correspondingly, a second communication apparatus sends the first information.

The first communication apparatus may receive the first information sent by the second communication apparatus. A communication link between the first communication apparatus and the second communication apparatus forms a first communication link. The first information may include a first reference signal and/or first data.

The first reference signal is used to measure channel state information, for example, may be a CSI-RS or another reference signal used for channel measurement. The second communication apparatus sends a CSI-RS to the first terminal apparatus to perform channel status measurement. The first communication apparatus may feed back CSI. For example, the first communication apparatus may feed back the CSI on a PUCCH/PUSCH.

The second communication apparatus may send the first data to the first communication apparatus. After receiving the first data, the first communication apparatus may feed back a HARQ-ACK or a hybrid automatic repeat request negative acknowledgment (negative acknowledgment, HARQ-NACK).

S320: The first communication apparatus receives second information, and correspondingly, a third communication apparatus sends the second information.

The first communication apparatus may receive the second information sent by the third communication apparatus. A communication link between the first communication apparatus and the third communication apparatus forms a second communication link. The second information may include a second reference signal and/or second data.

The second reference signal is used to measure channel state information, for example, may be a CSI-RS or another reference signal used for channel measurement. The third communication apparatus sends a CSI-RS to the first terminal apparatus to perform channel status measurement. The first communication apparatus may feed back CSI. For example, the first communication apparatus may feed back the CSI on a PUCCH/PUSCH.

The third communication apparatus may send the second data to the first communication apparatus. After receiving the second data, the first communication apparatus may feed back a HARQ-ACK or a HARQ-NACK.

The first communication apparatus receives information about at least two communication links, where the information about the at least two communication links may include the first information and the second information. For example, the first communication apparatus may receive the first reference signal and the second reference signal, or the first communication apparatus may receive the first data and the second data, or the first communication apparatus may receive the first reference signal and the second data, or the first communication apparatus may receive the first data and the second reference signal, or the first communication apparatus may receive the first reference signal, the first data, the second reference signal, the second data, and the like.

For example, before the first communication apparatus receives the second information sent by the third communication apparatus, the third communication apparatus may receive configuration information sent by the second communication apparatus. In this case, the second communication apparatus indicates only a resource pool, the CSI-RS in the second information may be sent with sidelink data, and the first communication apparatus may feed back the CSI by using a control-control unit (MAC CE).

It should be understood that the first information and the second information may be sent from a higher layer (an application layer) of a transmit end device (for example, a network device), or may be sent from a physical layer of the transmit end device. A terminal device may receive indication information, and is scheduled, based on the indication information, to receive reference information and/or data. The indication information may be configuration information, and the configuration information may be used to configure a first resource; or may be control information, for example, receiving control information (receiving control information, RxCI), and the control information may be used to schedule the terminal device to receive a reference signal and/or data. A reference signal receiving instruction included in the control information is used by the network device to schedule the terminal device to receive the reference signal. A data receiving instruction included in the control information is used by the network device to schedule the terminal to receive the reference signal. The data receiving instruction may be used by the network device to schedule the terminal device to receive the data.

For example, an indication for receiving the reference signal and/or an indication for receiving the data by the first communication apparatus may be downlink control information (downlink control information, DCI), or RxCI, or may be information indicating reference signal and/or data transmission, or the like.

It should be noted that there is no limitation on a sequence of performing the foregoing step S310 and step S320. Step S310 may be performed before step S320; or step S320 may be performed before step S310; or step S310 and step S320 are simultaneously performed. This is not limited.

S330: The first communication apparatus determines the first resource. As described in S210 above, specific content is not described again.

S340: The first communication apparatus determines a sequence of information included in the feedback information.

It should be understood that the feedback information includes channel state information and/or data response information. When the information about the at least two communication links received by the first communication apparatus includes only a reference signal, the feedback information is only channel state information determined by the first communication apparatus based on the reference signal. In this case, the first communication apparatus needs to sort only the channel state information in the feedback information. When the information about the at least two communication links received by the first communication apparatus includes only data, the feedback information is only data response information obtained by the first communication apparatus based on the reference signal. In this case, the first communication apparatus needs to sort only the data response information in the feedback information. When the information about the at least two communication links received by the first communication apparatus includes a reference signal and data, the feedback information includes channel state information determined by the first communication apparatus based on the reference signal and data response information obtained by the first communication apparatus based on the data. In this case, the first communication apparatus needs to sort the channel state information and the data response information in the feedback information.

The following describes a specific method for determining a sequence by the first communication apparatus by using an example in which the first communication apparatus sorts the data response information in the feedback information.

It should be understood that the sequence of the information included in the feedback information may be determined based on at least one of the following information: first identifiers, priorities of link types, and time domain resources of information about the at least two communication links.

The first identifier may include at least one of the following identifiers: identifiers of the information about the at least two communication links, identifiers of the at least two communication links, an identifier of the second communication apparatus, an identifier of the third communication apparatus, and an identifier of a carrier. It should be understood that the second communication apparatus and the third communication apparatus are transmit end apparatuses relative to the first communication apparatus, and the first communication apparatus is a receive end apparatus. It should be understood that one communication link may have one or more carriers. The following specifically describes how to sort the information included in the feedback information.

When the first identifiers are the same, the sequence of the information included in the feedback information is determined based on the priorities of the link types and/or the time domain resources of the information about the at least two communication links. It should be understood that the priority of the link type may be predefined in a protocol, or may be notified by the network device to the terminal device by using signaling. This is not limited in the application. For example, priorities of the link types may be sorted as follows: a Uu link, a sidelink, a satellite link, an access link, a backhaul link, a relay (relay) link, a customer premise equipment (customer premise equipment, CPE) link, and the like. It should be understood that the time domain resources of the information about the communication links may include a time domain resource of data and/or a time domain resource of control information (for example, DCI or RxCI) corresponding to the data.

Specifically, three types of communication links (a Uu link, a sidelink, and a satellite link) are used as an example. An identifier of data 1 on the Uu link is 1, and an identifier of data 2 on the Uu link is 2. An identifier of data 1 on the sidelink is 1, and an identifier of data 2 on the sidelink is 2. An identifier of data 1 on the satellite link is 1, and an identifier of data 2 on the satellite link is 2. In this case, the sequence of the information included in the feedback information cannot be determined by using only the first identifier. In one aspect, the sequence may be determined by using the priorities of the link types. The terminal device may determine, based on the priorities of the link types that are predefined in the protocol or that are notified by the network device by using the signaling, that priorities of the link types are: the Uu link, the sidelink, and the satellite link. Therefore, it is further determined that the sequence of the information included in the feedback information is: the data 1 on the Uu link, the data 2 on the Uu link, the data 1 on the sidelink, the data 2 on the sidelink, the data 1 on the satellite link, and the data 2 on the satellite link.

In another aspect, because the control information (for example, the RxCI) may be used to schedule the terminal device to receive data, one piece of control information may schedule a plurality of pieces of data, or a plurality of pieces of control information may schedule a plurality of pieces of data. To be specific, the sequence of the information included in the feedback information may be determined based on time domain resources of the control information (for example, the RxCI). For example, a time domain resource of the RxCI may include at least one of an RxCI start symbol number and an RxCI end symbol number. When communication link types of two pieces of data are the same, the two pieces of data are scheduled by two pieces of RxCI, a start symbol number of RxCI of data 1 is a symbol 0, and a start symbol number of RxCI of data 2 is a symbol 1, feedback for the data 1 is prior to feedback for the data 2. When communication link types of two pieces of data are the same, an end symbol number of RxCI of data 1 is a symbol 2, and an end symbol number of RxCI of the data 2 is a symbol 1, feedback for the data 1 is prior to feedback for the data 2. When communication link types of two pieces of data are the same, a start symbol number of RxCI of data 1 is a symbol 0, an end symbol number is 2, a start symbol number of RxCI of data 2 is a symbol 1, and an end symbol number is a symbol 1, feedback for the data 2 is prior to feedback for the data 1.

In still another aspect, when one piece of control information schedules a plurality of pieces of data, the sequence of the information included in the feedback information may be determined based on time domain resources of the data. For example, the time domain resource of the data may be at least one of a start symbol of the time domain resource of the data and an end symbol of the time domain resource of the data. When communication link types of two pieces of data are the same, a start symbol of a time domain resource of data 1 is a symbol 0, and a start symbol of a time domain resource of data 2 is a symbol 1, feedback for the data 1 is prior to feedback for the data 2. When communication link types of two pieces of data are the same, an end symbol of a time domain resource of data 1 is a symbol 2, and an end symbol of a time domain resource of data 2 is a symbol 1, feedback for the data 2 is prior to feedback for the data 1. When communication link types of two pieces of data are the same, a start symbol of a time domain resource of data 1 is a symbol 0, an end symbol of the time domain resource of the data 1 is a symbol 2, a start symbol of a time domain resource of data 2 is a symbol 1, and an end symbol of the time domain resource of the data 2 is a symbol 1, feedback for the data 2 is prior to feedback for the data 1.

It should be understood that the sequence of the information included in the feedback information may be determined with reference to the time domain resource of the data and the time domain resource of the control information corresponding to the data.

When the first identifiers are the same, the foregoing methods may be combined with each other, to jointly determine the sequence of the information included in the feedback information.

When the first identifiers are different, the sequence of the information included in the feedback information may be determined based on the first identifiers.

In a possible implementation, when identifiers of information about communication links are jointly numbered, the first communication apparatus may determine, based on the identifiers of the information about the communication links, the sequence of the information included in the feedback information. For example, for the joint numbering, identifiers of signals on the Uu link are 1 to 3, identifiers of signals on the sidelink are 5 to 8, and identifiers of signals on the satellite link are 9 to 12. Three types of communication links (the Uu link, the sidelink, and the satellite link) are used as an example. A method for determining a sequence based on identifiers of information about the communication links is as follows: For example, after receiving data of the foregoing communication links, the first communication apparatus determines the sequence of the information included in feedback information. A number of data 1 on the Uu link is 1, a number of data 2 on the Uu link is 2, a number of data 1 on the sidelink is 3, and a number of data 1 on the satellite link is 4. When the data 1 on the Uu link is successfully received, an acknowledgment (acknowledgment, ACK) is fed back. When the data 2 on the Uu link fails to be received, a negative acknowledgment (negative acknowledgment, NACK) is fed back. When the data 1 on the sidelink is successfully received, an ACK is fed back. When the data 1 on the satellite link is successfully received, an ACK is fed back. In this case, feedback information and a sequence of information included in the feedback information that are determined by the first communication apparatus are: an ACK, a NACK, an ACK, and an ACK.

In a possible implementation, the first communication apparatus may determine, based on the identifier of the second communication apparatus and the identifier of the third communication apparatus that are in the first identifier, the sequence of the information included in the feedback information. When the identifier of the second communication apparatus is an identifier 0, and the identifier of the third communication apparatus is an identifier 1, data sent by the second communication apparatus is prior to data sent by the third communication apparatus. For example, the identifier of the second communication apparatus is an identifier 0, the first communication apparatus receives data 1 sent by the second communication apparatus, the identifier of the third communication apparatus is an identifier 1, and the first communication apparatus receives data 2 sent by the second communication apparatus. If the data 1 is successfully received, an ACK is fed back. If the data 2 fails to be received, a NACK is fed back. In this case, feedback information and a sequence of information included in the feedback information that are determined by the first communication apparatus are: an ACK and a NACK.

In a possible implementation, the first communication apparatus may determine, based on the identifiers of the at least two communication links, the sequence of the information included in the feedback information. For example, an identifier of a communication link of data 1 received by the first communication apparatus is an identifier 1, an identifier of a communication link of data 2 received by the first communication apparatus is an identifier 0, and an identifier of a communication link of data 3 received by the first communication apparatus is an identifier 2. When the data 1 is successfully received, an ACK (where the identifier of the communication link is the identifier 1) is fed back. When the data 2 fails to be received, a NACK (where the identifier of the communication link is the identifier 0) is fed back. When the data 3 is successfully received, an ACK (where the identifier of the communication link is an identifier 3) is fed back. In this case, feedback information and a sequence of information included in the feedback information that are determined by the first communication apparatus are: a NACK, an ACK, and an ACK.

In a possible implementation, the first communication apparatus may sort the information included in the feedback information based on the time domain resources of the data. The method is similar to that described above, and details are not described herein again.

In a possible implementation, the first communication apparatus may determine, based on the identifiers of the carriers, the identifiers of the at least two communication links, and the identifiers of the information about the at least two communication links (identifiers of data), the sequence of the information included in the feedback information.

Optionally, first, the first communication apparatus determines a second sequence based on the identifier of the carrier. Then, the first communication apparatus further determines, based on the identifiers of the at least two communication links, the second sequence as a first sequence. Finally, the first communication apparatus further determines, based on the identifiers of the information about the at least two communication links (the identifiers of the data), the first sequence as a final sequence. The final sequence is the identifier of the information included in the feedback information.

The following describes the foregoing sorting method by using an example. It is assumed that one communication link includes a plurality of carriers, and the carrier carries data of communication links. The first communication apparatus receives data of a Uu link and a sidelink. The Uu link and the sidelink each include two carriers. A link identifier of the Uu link is 1, and a link identifier of the sidelink is 2. An identifier of a carrier 1 of the Uu link is 1, and an identifier of a carrier 2 is 2. An identifier of a carrier 1 of the sidelink is 1, and an identifier of a carrier 2 is 2. In this case, a sequence of information included in the feedback information determined by the first communication apparatus is: data response information of data included in the carrier 1 of the Uu link, data response information of data included in the carrier 1 of the sidelink, data response information of data included in the carrier 2 of the Uu link, and data response information of data included in the carrier 2 of the sidelink.

Optionally, first, the first communication apparatus determines, based on the identifiers of the at least two communication links, a second sequence. Then, the first communication apparatus further determines, based on the identifiers of the carriers, the second sequence as a first sequence. Finally, the first communication apparatus further determines, based on the identifiers of the information about the at least two links (the identifiers of the data), the first sequence as a final sequence.

The following describes the foregoing sorting method by using an example. It is assumed that one communication link includes a plurality of carriers, and the carrier carries data of communication links. The first communication apparatus receives data of a Uu link and a sidelink. The Uu link and the sidelink each include two carriers. A link identifier of the Uu link is 1, and a link identifier of the sidelink is 2. An identifier of a carrier 1 of the Uu link is 1, and an identifier of a carrier 2 is 2. An identifier of a carrier 1 of the sidelink is 1, and an identifier of a carrier 2 is 2. In this case, a sequence of information included in the feedback information determined by the first communication apparatus is: data response information of data included in the carrier 1 of the Uu link, data response information of data included in the carrier 2 of the Uu link, data response information of data included in the carrier 1 of the sidelink, and data response information of data included in the carrier 2 of the sidelink.

The following describes a specific method for determining a sequence by the first communication apparatus by using an example in which the first communication apparatus sorts the channel state information in the feedback information.

It should be understood that when the first identifiers are the same and the link types are the same, the first communication apparatus may determine a sequence of the channel state information based on information triggered by the channel state information. For example, channel state information with a small trigger identifier is prior to channel state information with a large trigger identifier.

For example, when the first identifiers are the same and the link types are the same, a trigger identifier of CSI 0 is 1, a trigger identifier of CSI 1 is 2, and a trigger identifier of CSI 2 is 3, a sequence of CSI is: CSI 0, CSI 1, and CSI 2.

It should be understood that when the first identifiers and/or the link types are different, the first communication apparatus may sort the channel state information in the feedback information based on the first identifiers or the link types.

In a possible implementation, the first communication apparatus may receive the information about the at least two communication links, that is, may indicate the first identifier to the first communication apparatus by using the at least two communication links. The first identifier includes the identifiers of the information about the at least two communication links (identifiers of reference signals), the identifiers of the at least two communication links, the identifier of the second communication apparatus, and the identifier of the third communication apparatus.

For example, the first communication apparatus determines a feedback sequence of the channel state information based on the identifiers of the at least two communication links, where channel state information of a communication link with a small identifier is prior to channel state information of a communication link with a large identifier. For example, the first communication apparatus determines the feedback sequence of the channel state information based on the identifier of the second communication apparatus and the identifier of the third communication apparatus. The identifier of the second communication apparatus is an identifier 0, and the identifier of the third communication apparatus is an identifier 1. In this case, channel state information of the second communication apparatus is prior to channel state information of the third communication apparatus.

In a possible implementation, the first communication apparatus may determine a sequence based on an identifier in CSI measurement configuration information, and indicate a feedback identifier, a feedback priority identifier, or the like in the CSI measurement feedback configuration. CSI of a communication pair with a small identifier is prior to CSI of a communication pair with a large identifier (where a feedback sequence is determined based on a link identifier sequence).

The identifier in the CSI measurement configuration information may be a transmit end device identifier, a receive end device identifier, or a resource identifier. For example, identifiers in the CSI measurement configuration information may be: CSI 0: an identifier 1 of a sending device and an identifier 1 of a receiving device; CSI 1: an identifier 2 of a sending device and an identifier 1 of a receiving device; and CSI M2-1: an identifier M2 of a sending device, and an identifier 1 of a receiving device. A sequence that is of the CSI and that is determined based on the identifiers in the CSI measurement configuration information is: CSI 0, CSI 1, and CSI M2-1.

In a possible implementation, the first communication apparatus may sort the channel state information based on the priorities of the link types. Specific content is similar to that described above, and details are not described herein again.

In a possible implementation, the first communication apparatus may determine, based on the identifiers of the carriers, the identifiers of the at least two communication links, and the identifiers of the information (the identifiers of the reference signals) about the at least two communication links, a sequence of the information included in the feedback information.

Optionally, first, the first communication apparatus determines, based on the identifier of the carrier, a second sequence. Then, the first communication apparatus further determines, based on identifiers of the at least two communication links, the second sequence as a first sequence. Finally, the first communication apparatus further determines, based on the identifiers of the information (the identifiers of the reference signals) about the at least two communication links, the first sequence as a final sequence. The final sequence is the identifier of the information included in the feedback information.

The following describes the foregoing sorting method by using an example. One communication link includes a plurality of carriers, and the carrier carries reference signals of communication links. The first communication apparatus receives reference signals of a Uu link and a sidelink. The Uu link and the sidelink each include two carriers. A link identifier of the Uu link is 1, and a link identifier of the sidelink is 2. An identifier of a carrier 1 of the Uu link is 1, and an identifier of a carrier 2 is 2. An identifier of a carrier 1 of the sidelink is 1, and an identifier of a carrier 2 is 2. The first communication apparatus receives the reference signals of the Uu link and the sidelink, to determine a sequence of the channel state information included in the feedback information. In this case, a sequence that is of the information included in the feedback information and that is determined by the first communication apparatus is: channel state information determined by using a reference signal included in the carrier 1 of the Uu link, channel reference information determined by using a reference signal included in the carrier 1 of the sidelink, channel reference information determined by using a reference signal included in the carrier 2 of the Uu link, and channel reference information determined by using a reference signal included in the carrier 2 of the sidelink.

Optionally, first, the first communication apparatus determines, based on the identifiers of the at least two communication links, a second sequence. Then, the first communication apparatus further determines the second sequence as a first sequence based on the identifier of the carrier. Finally, the first communication apparatus further determines, based on the identifiers of the information about the at least two communication links (the identifiers of the reference signals), the first sequence as a final sequence.

The following describes the foregoing sorting method by using an example. It is assumed that one communication link includes a plurality of carriers, and the carrier carries reference signals of communication link. The first communication apparatus receives reference signals of a Uu link and a sidelink. The Uu link and the sidelink each include two carriers. A link identifier of the Uu link is 1, and a link identifier of the sidelink is 2. An identifier of a carrier 1 of the Uu link is 1, and an identifier of a carrier 2 is 2. An identifier of a carrier 1 of the sidelink is 1, and an identifier of a carrier 2 is 2. In this case, a sequence that is of the information included in the feedback information and that is determined by the first communication apparatus is: channel state information determined by using a reference signal included in the carrier 1 of the Uu link, channel state information determined by using a reference signal included in the carrier 2 of the Uu link, channel state information determined by using a reference signal included in the carrier 1 of the sidelink, and channel state information determined by using a reference signal included in the carrier 2 of the sidelink.

Optionally, feedback information of the channel state information and feedback information of the data may be jointly encoded and fed back, or may be separately encoded and fed back. Specifically, this is not limited in the application.

It should be understood that the foregoing methods may be combined with each other to jointly determine the sequence of the information included in the feedback information. For example, the first communication apparatus determines, based on the identifier of the second communication apparatus, the identifier of the third communication apparatus, and identifiers of data of the at least two communication links, or based on the identifiers of the at least two communication links and identifiers of data of the at least two communication links, or based on the identifier of the second communication apparatus, the identifier of the third communication apparatus, and the time domain resources of the information about the at least two communication links, or based on the identifiers of the at least two communication links and the time resources of the information about the at least two communication links, the sequence of the information included in the feedback information. It should be understood that a method for determining the sequence of the information included in the feedback information includes but is not limited to the foregoing methods, and any other method for determining the sequence of the information included in the feedback information falls within the protection scope of the application.

Based on the solution in the foregoing embodiments, the terminal device (the first communication apparatus) uniformly and simultaneously feeds back information about all communication links to the network device (the second communication apparatus), so that the network device performs unified scheduling, quickly determines a policy, and flexibly allocates resources. The terminal device can directly feed back the feedback information to the network device, to reduce communication latency, reduce communication overheads, and improve communication efficiency.

S350: The first communication apparatus sends the feedback information on the first resource.

Specific content is similar to that in the foregoing S220, and details are not described herein again.

S360: The second communication apparatus receives the feedback information on the first resource.

Optionally, the second communication apparatus receives the feedback information on the first resource, and interprets the feedback information based on the determined sequence of the information included in the feedback information.

A method for determining the sequence of the information included in the feedback information by the second communication apparatus may be the same as or similar to a method for determining the sequence of the information included in the feedback information by the first communication apparatus. Details are not described herein again.

Specific content is similar to that in the foregoing S230, and details are not described herein again.

The following describes a scenario to which an embodiment of the application is applicable by using an example.

FIG. 4 is a schematic diagram of a scenario of a two-layer communication structure to which an embodiment of the application is applicable. In the two-layer communication structure, a terminal device 11 (a first communication apparatus) can implement quick Uu and sidelink feedback. To be specific, a network device (a second communication apparatus) sends first information to the terminal device 11 (the first communication apparatus) (for example, a procedure ① in the figure), and a terminal 1 (a third communication apparatus) sends second information to the terminal device 11 (for example, a procedure ① in the figure). After the terminal device 11 receives reference signals and/or data of at least two communication links, the terminal device 11 can perform unified feedback of channel state information and/or data response information to the network device (for example, a procedure ③ in the figure). Communication latency can be reduced, and feedback overheads can be reduced. The network device schedules feedback information, so that while latency is reduced, flexible resource allocation is implemented, communication performance is improved, and a quantity of terminal devices that can provide services is increased.

Further, in a scenario in which flexible switching of a communication link (for example, switching of the terminal device 11) is needed, the network device may schedule the terminal 11 and the terminal 1 to send a feedback message, to implement communication between the terminal devices and/or obtain channel information of a communication link between the terminal devices. In addition, to improve communication reliability, the network device may also schedule communication between the network device and the terminal device 11. For example, the network device sends a reference signal and/or data to the terminal device, to implement communication between the network device and the terminal device 11 and/or obtain channel information of a communication link between the network device and the terminal device 11. When receiving reference signals and/or data of a plurality of communication links, the terminal device 11 can quickly and jointly send feedback information, so that latency can be reduced. Joint feedback for the plurality of communication links can implement flexible resource allocation and improve communication performance.

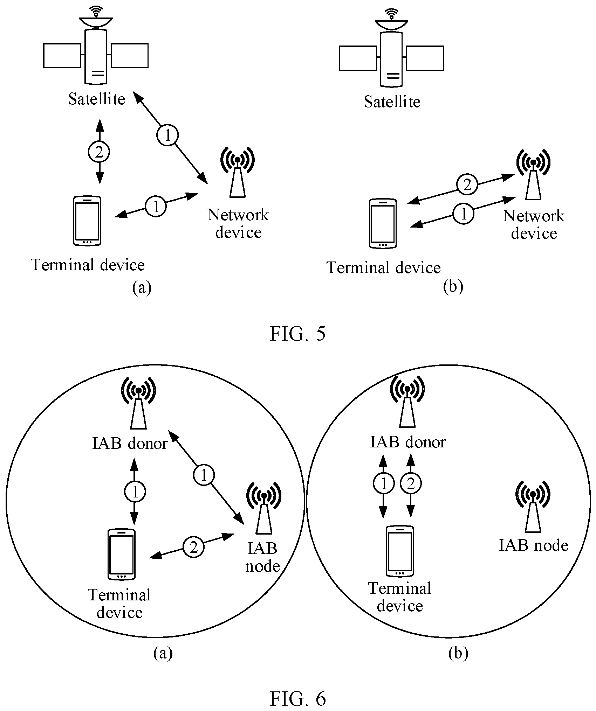

FIG. 5 is a schematic diagram of a satellite communication scenario to which an embodiment of the application is applicable. A network device (a second communication apparatus) may send configuration information to a satellite (a third communication apparatus) and a terminal device (a first communication apparatus) (for example, a procedure ① in FIG. (a)). The configuration information indicates the satellite to send a reference signal and/or data to the terminal device. The satellite receives the configuration information, and sends the reference signal and/or the data based on the configuration information (for example, a procedure ② in FIG. (a)). The terminal device receives the configuration information, and obtains corresponding feedback information based on the reference signal and/or the data in the configuration information. In addition, the network device (the second communication apparatus) may send configuration information to the terminal device (the first communication apparatus) (for example, a procedure ① in FIG. (b)), the terminal device may receive a reference signal and/or data sent by the network device (for example, a procedure ② in FIG. (b)), and the terminal device may send corresponding feedback information to the network device. In this scenario, the network device can uniformly coordinate "air-ground-space" communication links and implement joint feedback of a satellite communication link and a communication line of a terrestrial network device, to reduce latency and improve communication performance.

FIG. 6 is a schematic diagram of an IAB communication scenario to which an embodiment of the application is applicable. A network device (a second communication apparatus) may send configuration information to an IAB node (a third communication apparatus) and a terminal device (a first communication apparatus) (for example, a procedure ① in FIG. (a)). The configuration information indicates the IAB node to send a reference signal and/or data to the terminal device (for example, the procedure ② in FIG. (a)). The IAB node receives the configuration information, and sends a reference signal and/or data to the terminal device based on the configuration information. The terminal device receives the configuration information, and obtains corresponding feedback information based on the reference signal and/or the data in the configuration information. In addition, the network device (the second communication apparatus) may send configuration information to the terminal device (the first communication apparatus) (for example, a procedure ① in FIG. (b)), the terminal device may receive a reference signal and/or data sent by the network device (for example, a procedure ② in FIG. (b)), and the terminal device may send corresponding feedback information to the network device. In this scenario, when the network device schedules communication between the IAB node and the terminal device, the network device may also schedule the network device to communicate with the terminal device. When the terminal device receives reference signals and/or data of a plurality of communication links, joint feedback of an IAB communication link and a communication link of a terrestrial network device may be implemented, to reduce latency and improve communication performance. For a backhaul link and an access link in the IAB communication, a unified communication method can be used, so that the network device can flexibly schedule communication of the two communication links, and the network device can perform unified and joint feedback, to implement dynamic resource sharing, reduce latency, and reduce feedback overheads.

It should be understood that higher layer signaling in the embodiment of the application may be RRC signaling, MAC signaling, other higher layer signaling, or the like. Physical layer signaling in the embodiment of the application may be RxCI, DCI, physical layer signaling, or the like.

Based on the solution described in the foregoing embodiment, the network device (the second communication apparatus) may configure a resource for the terminal device (the first communication apparatus), and the terminal device may receive information sent by the network device or send feedback information on a same resource. In addition, when receiving information of a plurality of links, the terminal device can perform unified feedback of the information about the plurality of links to the network device. This avoids a case in which the terminal device 11 (the first communication apparatus) needs to first send the feedback information to the terminal device 1 (the third communication apparatus), and then the terminal device 1 sends the feedback information to the network device. In this way, communication latency is reduced, communication signaling overheads are reduced, more flexible resource scheduling is implemented, and communication performance is improved.

Furthermore, in the foregoing step S340, the sequence of the information included in the feedback information is determined. The feedback information may be divided into different information blocks, and manners of distinguishing between the information blocks include but are not limited to the following two manners. The following describes the two manners in detail.

### Manner 1

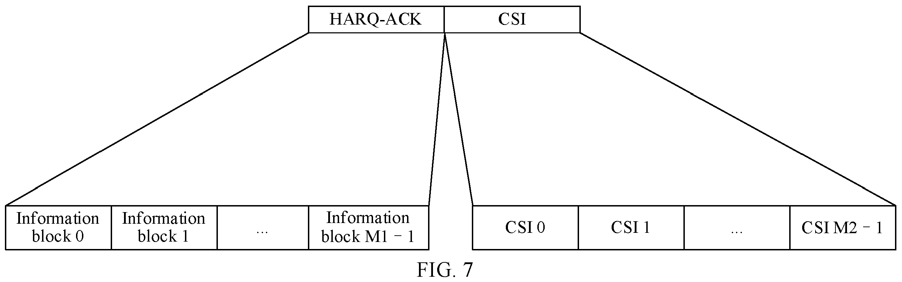

The feedback information may include a first information block and a second information block. The feedback information includes channel state information and data response information. The first communication apparatus determines that the channel state information is located in the first information block, and the first information block includes channel state information of the at least two communication links. The first communication apparatus determines that the data response information is located in the second information block, and the second information block includes data response information of the at least two communication links. That is, the channel state information and the data response information are used as different information blocks. In other words, the first information block is a channel state information block, and the second information block is a data response information block. FIG. 7 is a schematic diagram of the first information block and the second information block.

Information in each information block needs to be encoded and fed back. In the embodiment of the application, the channel state information and the data response information are used as an example. The first communication apparatus jointly encodes all channel state information in the first information block, and the first communication apparatus jointly encodes all data response information in the second information block. In other words, the channel state information in the first information block and the data response information in the second information block are jointly fed back.

In a possible implementation, a method for determining a sequence of all the channel state information in the first information block includes: The first communication apparatus determines a feedback sequence based on identifiers in configuration information, where the configuration information includes an identifier of the second communication apparatus, an identifier of the third communication apparatus, an identifier of a communication link, and an identifier of a reference signal.

Optionally, channel state information of a communication link with a small identifier is prior to channel state information of a communication link with a large identifier. For a specific step of arranging the sequence, refer to descriptions in the foregoing embodiment. Details are not described herein again.

It should be understood that the feedback information may include information blocks of a plurality of communication links, and one communication link may include a plurality of carriers. Therefore, the feedback information also includes multi-carrier, multi-communication link, and multi-data communication feedback.

In a possible implementation, the first communication apparatus jointly encodes data response information (for example, a HARQ-ACK in FIG. 7) of the received data. Data of N communication links respectively corresponds to N HARQ-ACK information bit blocks. One information bit block may include 1 or 2 bits. A quantity of bits included in a HARQ-ACK information bit block of each communication link may be predefined, or may be notified by the network device to the terminal device by using signaling, or may be determined based on configuration information. For example, a quantity of bits of the data response information may be: a 1-bit HARQ-ACK or a 2-bit HARQ-ACK, or determined based on a quantity of schedulable codewords or an RxCI format. A total quantity of bits of the HARQ-ACK may be determined by specifying a maximum quantity of communication links, and there may be a padding bit for a codeword in which no scheduling information is detected.

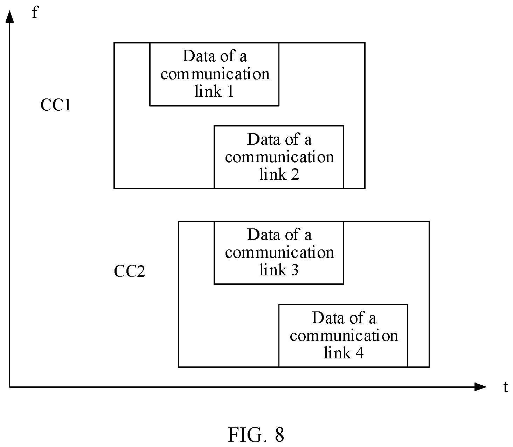

In a possible implementation, a method for determining a sequence of the data response information in the second information block includes: determining the sequence of the information in the feedback information based on the identifiers of the carriers, the identifiers of the communication links, and the identifiers of the data. For example, when receiving a plurality of pieces of data of a plurality of communication links of a plurality of carriers, the first communication apparatus may first feed back HARQ-ACK information of data with a smaller carrier identifier and a smaller communication link identifier, and then feed back HARQ-ACK information of data with a smaller carrier identifier and a larger communication link identifier. For ease of understanding, FIG. 8 is a schematic diagram of sorting of information included in feedback information. As shown in FIG. 8, carrier identifiers are CC1 and CC2. Feedback information of data (Link 1 data) on a communication link marked as 1 is prior to feedback information of data (Link 2 data) on a communication link marked as 2 in CC 1 with a smaller carrier identifier, and feedback information of data (Link 3 data) on a communication link marked as 3 is prior to feedback information of data (Link 4 data) on a communication link marked as 4 in CC2 with a larger carrier identifier. According to the foregoing sorting method, a sequence of the information included in the feedback information is: Link 1 data, Link 2 data, Link 3 data, and Link 4 data.

The terminal (the first communication apparatus) prioritizes carrier identifiers for sorting, and uses a carrier as a granularity. After receiving data of a carrier, the terminal device may generate HARQ-ACK information corresponding to the carrier. Processing is simple, and sorting is convenient.

Optionally, a sequence of the information included in the feedback information may be determined first based on a sequence of communication link identifiers and then based on a sequence of carrier identifiers.

For example, when the first communication apparatus receives a plurality of pieces of data of a plurality of communication links of a plurality of carriers, a sequence of HARQ-ACK information may be determined as follows: HARQ-ACK information of data with a smaller communication link identifier and a smaller carrier identifier, HARQ-ACK information of data with a smaller communication link identifier and a larger carrier identifier, HARQ-ACK information of data with a larger communication link identifier and a smaller carrier identifier, and HARQ-ACK information of data with a larger communication link identifier and a larger carrier identifier.

The following describes, by using an example, the foregoing method for determining the sequence of the plurality of pieces of data of the plurality of communication links of the plurality of carriers. It is assumed that a link identifier of a Uu link is 1, a link identifier of a sidelink is 2, an identifier of a carrier 1 of the Uu link is 1, an identifier of a carrier 2 is 2, an identifier of a carrier 1 of the sidelink is 1, an identifier of a carrier 2 is 2, and the carrier carries data of communication links. In this case, a sequence that is of HARQ-ACK information of the data and that is determined by the first communication apparatus is: HARQ-ACK information of data included in the carrier 1 of the Uu link, HARQ-ACK information of data included in the carrier 2 of the Uu link, HARQ-ACK information of data included in the carrier 1 of the sidelink, and HARQ-ACK information of data included in the carrier 2 of the sidelink.

Optionally, a sequence of the information included in the feedback information may be determined first based on a sequence of carrier identifiers and then based on a sequence of communication link identifiers.

For example, when the first communication apparatus receives a plurality of pieces of data of a plurality of communication links of a plurality of carriers, a sequence of HARQ-ACK information may be determined as follows: HARQ-ACK information of data with a smaller carrier identifier and a smaller communication link identifier, HARQ-ACK information of data with a smaller carrier identifier and a larger communication link identifier, HARQ-ACK information of data with a larger carrier identifier and a smaller communication link identifier, and HARQ-ACK information of data with a larger carrier identifier and a larger communication link identifier.

The following describes, by using an example, the foregoing method for determining the sequence of the plurality of pieces of data of the plurality of communication links of the plurality of carriers. It is assumed that a link identifier of a Uu link is 1, a link identifier of a sidelink is 2, an identifier of a carrier 1 of the Uu link is 1, an identifier of a carrier 2 is 2, an identifier of a carrier 1 of the sidelink is 1, an identifier of a carrier 2 is 2, and the carrier carries data of communication links. In this case, a sequence that is of HARQ-ACK information of the data and that is determined by the first communication apparatus is: HARQ-ACK information of data included in the carrier 1 of the Uu link, HARQ-ACK information of data included in the carrier 1 of the sidelink, HARQ-ACK information of data included in the carrier 2 of the Uu link, and HARQ-ACK information of data included in the carrier 2 of the sidelink.

The terminal (the first communication apparatus) may sort HARQ-ACK information of a plurality of carriers, a plurality of communication links, and a plurality of pieces of data, so that the network device (the second communication apparatus) quickly determines data scheduling, carrier selection, communication link selection, and the like of a corresponding communication link next time. For another example, when receiving a plurality of pieces of data of a plurality of communication links of a plurality of carriers, the first communication apparatus may first feed back HARQ-ACK information of data with a small data identifier, data with a small carrier identifier, and then data with a small communication link identifier.

Optionally, a sequence of the information included in the feedback information may be determined first based on a sequence of data identifiers, based on a sequence of carrier identifiers, and then based on a sequence of communication link identifiers.

The foregoing sorting method is described by using an example. It is assumed that a link identifier of a Uu link is 1, a link identifier of a sidelink is 2, an identifier of a carrier 1 of the Uu link is 1, an identifier of a carrier 1 of the sidelink is 1, and an identifier of a carrier 2 is 2. The carrier 1 of the Uu link carries data 1, the carrier 1 also carries data 2, the carrier 1 of the sidelink carries data 1, and the carrier 2 carries data 2. In this case, a sequence of determining the HARQ-ACK information of the data by the first communication apparatus is: HARQ-ACK information of the data 1 carried by the carrier 1 of the Uu link, HARQ-ACK information of the data 2 carried by the carrier 1 of the Uu link, and HARQ-ACK information of the data 1 carried by the carrier 1 of the sidelink, and HARQ-ACK information of the data 2 carried on the carrier 2 of the sidelink.

The network device (the second communication equipment) can quickly obtain feedback information of each communication link, to quickly perform global unified scheduling, and further reduce communication latency.

### Manner 2

The feedback information may include a third information block and a fourth information block, and the feedback information includes information about the at least two communication links. The embodiment of the application is used as an example. The feedback information includes information about the first communication link and information about the second communication link. The information about the first communication link is located in the third information block, and the information about the second communication link is located in the fourth information block. In other words, the third information block includes channel state information and/or data response information of the first communication link, and the fourth information block includes channel state information and/or data response information of the second communication link.

Optionally, a quantity of information blocks may be determined based on a quantity of communication links, and each communication link corresponds to one information block. In the embodiment of the application, two information blocks corresponding to two communication links are used as examples. However, the protection solution of the application is not limited thereto. In other words, in the embodiment, information blocks are distinguished by using communication links.

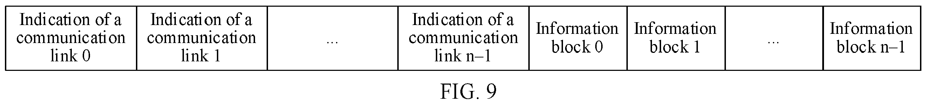

Specifically, FIG. 9 shows indications of N communication links. The feedback information includes communication link indication information before the information block. The indications of the communication links include an indication of a transmit end device (and an indication of a receive end device, which may be omitted) or a communication link identifier. The N communication links respectively correspond to subsequent N information blocks. The information block includes channel state information and/or data response information included in the feedback information.

A quantity of bits indicated by the communication links may be predefined in a protocol, or the network device notifies the terminal device by using signaling, for example, indicates a transmit end device identifier. A quantity N of information blocks may be predefined in a protocol, or the network device may notify the terminal device by using signaling. A quantity of bits included in the information block may be predefined, or the network device may notify the terminal device by using signaling, or may be determined based on configuration information. For example, a 1-bit HARQ-ACK or a 2-bit HARQ-ACK may be predefined, or a quantity of bits included in the information block may be determined based on a quantity of schedulable codewords or an RxCI format.

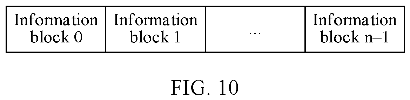

Specifically, as shown in FIG. 10, the information block includes an index indication of the transmit end device (and an index indication of the receive end device, which may be omitted) or a communication link identifier. Feedback information of the N communication links respectively corresponds to the N information blocks, and the first communication apparatus may determine a feedback sequence based on the configuration information or an identifier in the RxCI. For example, a plurality of information blocks are respectively:
an information block 0: an identifier 1 of a transmit end device, an identifier 1 of a receive end device, (or a communication link identifier 1), channel state information and/or data response information;
an information block 1: an identifier 2 of the transmit end device, an identifier 1 of the receive end device, (or a communication link identifier 2), the channel state information and/or the data response information;
   ...; and
an information block n-1: an identifier 3 of the transmit end device, the identifier 1 of the receive end device, (or a communication link identifier 3), the channel state information, and/or the data response information.

It should be understood that one communication link of a plurality of carriers may be used as a plurality of information blocks, or may be used as one information block. For feedback of a plurality of carriers, a plurality of communication links, and a plurality of data communication, sorting may be performed based on carrier identifiers, communication link identifiers, and data identifiers.

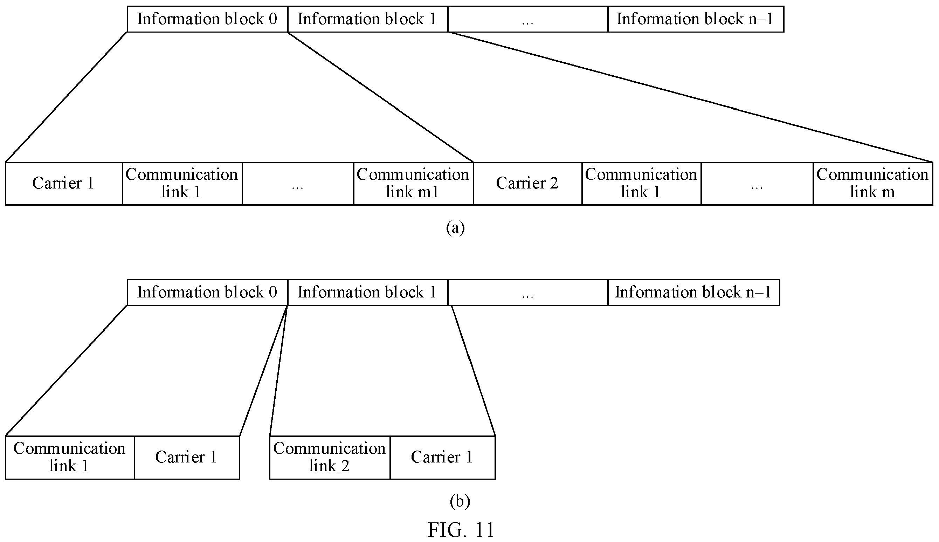

Specifically, for ease of understanding, FIG. 11 shows a multi-carrier, multi-communication link, and multi-data communication feedback method.

Optionally, a sequence of the information included in the feedback information may be determined first based on a sequence of carrier identifiers and then based on a sequence of communication link identifiers.

For example, when the first communication apparatus receives a plurality of pieces of data of a plurality of communication links of a plurality of carriers, a sequence of information included in the feedback information may be determined as follows: information included in feedback information with a smaller carrier identifier and a smaller communication link identifier, information included in feedback information with a smaller carrier identifier and a larger communication link identifier, information included in feedback information with a larger carrier identifier and a smaller communication link identifier, and information included in feedback information with a larger carrier identifier and a larger communication link identifier.

The following describes, by using an example, the foregoing method for determining the sequence of the plurality of pieces of data of the plurality of communication links of the plurality of carriers. It is assumed that a link identifier of a Uu link is 1, a link identifier of a sidelink is 2, an identifier of a carrier 1 of the Uu link is 1, an identifier of a carrier 2 is 2, an identifier of a carrier 1 of the sidelink is 1, an identifier of a carrier 2 is 2, and the carrier carries data of communication links. In this case, a sequence that is of information included in feedback information and that is determined by the first communication apparatus is: feedback information of information included in the carrier 1 of the Uu link, feedback information of information included in the carrier 1 of the sidelink, feedback information of information included in the carrier 2 of the Uu link, and feedback information of information included in the carrier 2 of the sidelink. It should be understood that a sequence of information included in feedback information of each communication block shown in FIG. 11 may be determined according to the foregoing method.

Based on the foregoing sequence determining method, the terminal device (the first communication apparatus) first performs sorting based on carrier identifiers, and uses a carrier as a granularity, to facilitate sorting when the terminal completes receiving data and/or a pilot of a carrier and generates channel state information and/or data response information corresponding to the carrier.

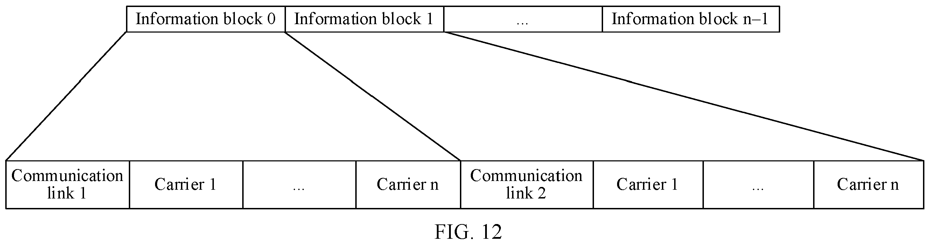

Specifically, for ease of understanding, FIG. 12 shows another multi-carrier, multi-communication link, and multi-data communication feedback method.

Optionally, a sequence of the information included in the feedback information may be determined first based on a sequence of communication link identifiers and then based on a sequence of carrier identifiers.

For example, when the first communication apparatus receives a plurality of pieces of data of a plurality of communication links of a plurality of carriers, a sequence of information included in the feedback information may be determined as follows: information included in feedback information with a smaller communication link identifier and a smaller carrier identifier, information included in feedback information with a smaller communication link identifier and a larger carrier identifier, information included in feedback information with a larger communication link identifier and a smaller carrier identifier, and information included in feedback information with a larger communication link identifier and a larger carrier identifier.

The following describes, by using an example, the foregoing method for determining the sequence of the plurality of pieces of data of the plurality of communication links of the plurality of carriers. It is assumed that a link identifier of a Uu link is 1, a link identifier of a sidelink is 2, an identifier of a carrier 1 of the Uu link is 1, an identifier of a carrier 2 is 2, an identifier of a carrier 1 of the sidelink is 1, an identifier of a carrier 2 is 2, and the carrier carries data of communication links. In this case, a sequence that is of information included in feedback information and that is determined by the first communication apparatus is: feedback information of information included in the carrier 1 of the Uu link, feedback information of information included in the carrier 2 of the Uu link, feedback information of information included in the carrier 1 of the sidelink, and feedback information of information included in the carrier 2 of the sidelink. It should be understood that a sequence of information included in feedback information of each communication block shown in FIG. 12 may be determined according to the foregoing method.

Based on the foregoing method for determining the sequence, the terminal device (the first communication apparatus) first performs sorting based on the communication link identifiers, and may feed back channel state information and/or data response information of a plurality of carriers, a plurality of pieces of data, and a plurality of pilots for the communication link, so that the network device (the second communication apparatus) quickly determines data scheduling, carrier selection, communication link selection, and the like of the communication link next time.

Based on the foregoing technical solution in which the feedback information is divided into different information blocks, it is convenient for the network device (the second communication apparatus) to quickly obtain feedback information of each communication link, and perform global coordination/unified scheduling based on the obtained feedback information, so that communication latency can be effectively reduced, and communication efficiency can be improved.

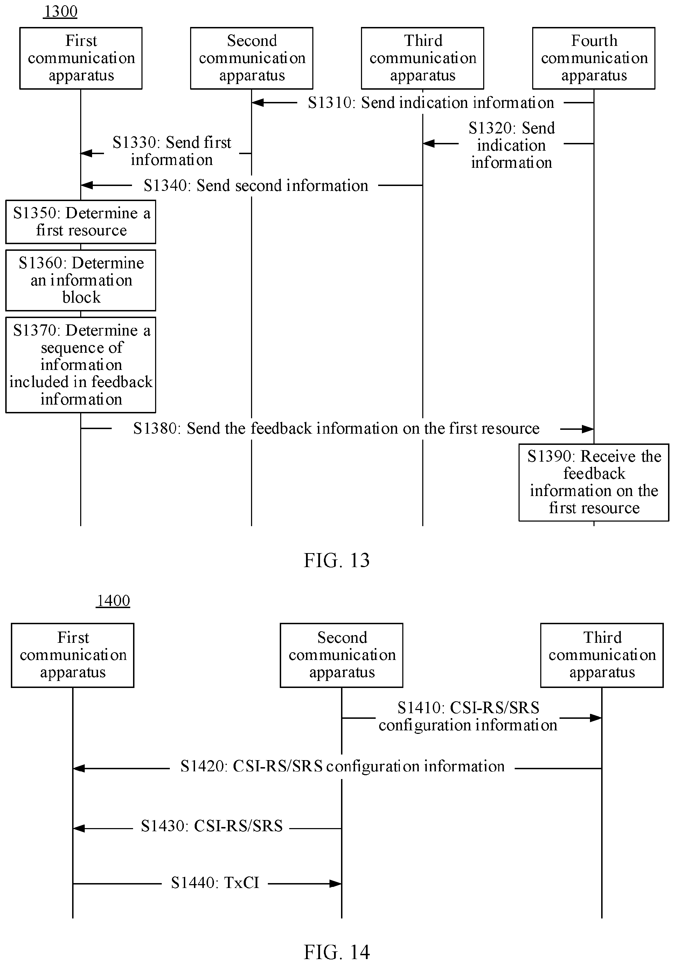

FIG. 13 is a schematic flowchart of another communication method 1300 according to the application. According to the method 1300, a first communication apparatus can perform unified and joint coding on information (channel state information and data response information) included in feedback information, to implement unified and joint feedback of a plurality of communication links. It should be understood that a fourth communication apparatus in the embodiment includes but is not limited to a network device. Refer to FIG. 13. The following describes steps.

S1310: The fourth communication apparatus sends indication information to a second communication apparatus, and correspondingly, the second communication apparatus receives the indication information.

It should be understood that the fourth communication apparatus sends the indication information to the second communication apparatus, where the indication information indicates the second communication apparatus to send first information to the first notification apparatus.

Optionally, the indication information further includes configuration information, and the first communication apparatus may determine a first resource based on the configuration information. For example, the configuration information may be specifically sent by the fourth communication apparatus to the first communication apparatus, or may be carried in the indication information. It should be understood that the indication information may be configuration information, and the configuration information may be information used to configure the first resource. Alternatively, the indication information may be control information, for example, RxCI, and the RxCI may be used to schedule a terminal device to receive a reference signal and data.

S1320: The fourth communication apparatus sends indication information to a third communication apparatus, and correspondingly, the third communication apparatus receives the indication information.

It should be understood that the fourth communication apparatus sends the indication information to the third communication apparatus, where the indication information indicates the third communication apparatus to send second information to the first notification apparatus.

Optionally, the indication information further includes the configuration information, and the first communication apparatus may determine the first resource based on the configuration information. For example, the configuration information may be specifically sent by the fourth communication apparatus to the first communication apparatus, or may be carried in the indication information.

S1330: The second communication apparatus sends the first information, and correspondingly, the first communication apparatus receives the first information.

Specific content is similar to that in the foregoing S310, and details are not described herein again.

S1340: The third communication apparatus sends the second information, and correspondingly, the first communication apparatus receives the second information.

Specific content is similar to that in the foregoing S320, and details are not described herein again.

S1350: The first communication apparatus determines the first resource.

Specific content is similar to that in the foregoing S210, and details are not described herein again.

S1360: The first communication apparatus determines an information block. This step is optional. Detailed content of distinguishing between information blocks is described above, and details are not described herein again.

S1370: The first communication apparatus determines a sequence of the information included in the feedback information.

Specific content is similar to that in the foregoing S340, and details are not described herein again.

S1380: The first communication apparatus sends the feedback information on the first resource.

Specific content is similar to that in the foregoing S350, and details are not described herein again.

S1390: The fourth communication apparatus receives the feedback information on the first resource.

Specific content is similar to that in the foregoing S360, and details are not described herein again.

Based on the technical solution in the foregoing embodiment of the application, a unified communication method for transmission control information can be implemented, so that communication latency can be reduced, feedback overheads of communication can be reduced, and feedback information of all communication links can be unified, to implement more flexible resource scheduling and improve communication performance.

It may be further understood that a reference signal used for channel measurement in the embodiment of the application may further include but is not limited to a CSI-RS and/or a sounding reference signal (sounding reference signal, SRS), or may be another reference signal, for example, a reference signal used for perception. This is not limited in the embodiment of the application.

FIG. 14 is a flowchart of feedback of a CSI-RS and an SRS reference signal. It should be understood that the first communication apparatus receives a CSI-RS and/or an SRS included in information about at least two communication links, determines TxCI based on the received CSI-RS and/or SRS, and uniformly sends the TxCI to the second communication apparatus. For specific steps, refer to the method 300. Details are not described herein again. According to the method provided in the embodiment, communication latency can be reduced, signaling overheads can be reduced, unified feedback of a plurality of communication links can be implemented, resource configuration is more flexible, and communication performance is improved.

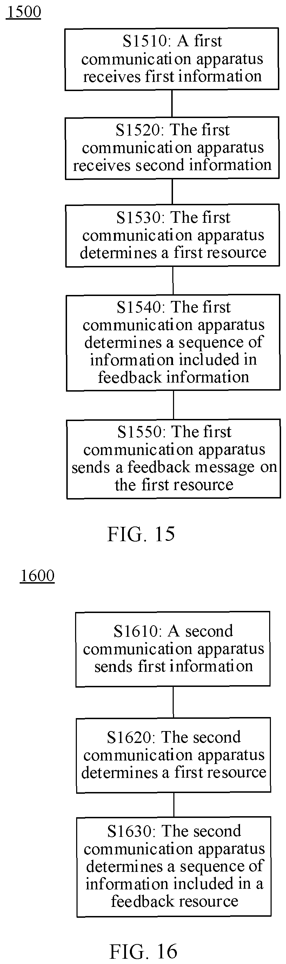

Based on the method shown in FIG. 3, alternatively, as shown in FIG. 15, a communication method provided in an embodiment of the application may be described from a perspective of a first communication apparatus.

S1510: The first communication apparatus receives first information.

S1520: The first communication apparatus receives second information.

S1530: The first communication apparatus determines a first resource.

S1540: The first communication apparatus determines a sequence of information included in feedback information.

S1550: The first communication apparatus sends the feedback information on the first resource.

The foregoing steps are similar to the foregoing content, and details are not described herein again.

It should be noted that there is no limitation on a sequence of performing the foregoing step S1510 and step S1520. Step S1510 may be performed before step S1520; or step S1520 may be performed before step S1510; or step S1510 and step S1520 are simultaneously performed. This is not limited.

It should be noted that there is no limitation on a sequence of performing the foregoing step S1530 and step S1510/step S1520. Step S1530 may be performed before step S1510/step S1520; or step S1510/step S1520 may be performed before step S1530; or step S1530 and step S1510/step S1520 are simultaneously performed. This is not limited.

Based on the method shown in FIG. 3, alternatively, as shown in FIG. 16, a communication method provided in an embodiment of the application may be described from a perspective of a second communication apparatus.

S1610: The second communication apparatus sends first information.

S1620: The second communication apparatus determines a first resource.

S1630: The second communication apparatus determines a sequence of information included in feedback information. It should be understood that this step helps the second communication apparatus correctly interpret the feedback information.

S1640: The second communication apparatus receives and sends the feedback information on the first resource.

The foregoing steps are similar to the foregoing content, and details are not described herein again.

It should be noted that there is no limitation on a sequence of performing the foregoing step S 1610 and step S1620. Step S1610 may be performed before step S1620; or step S 1620 may be performed before step S1610; or step S1610 and step S 1620 are simultaneously performed. This is not limited.

It should be noted that there is no limitation on a sequence of performing the foregoing step S1630 and step S1640. Step S1630 may be performed before step S1640; or step S1640 may be performed before step S 1630; or step S 1630 and step S 1630 are simultaneously performed. This is not limited.

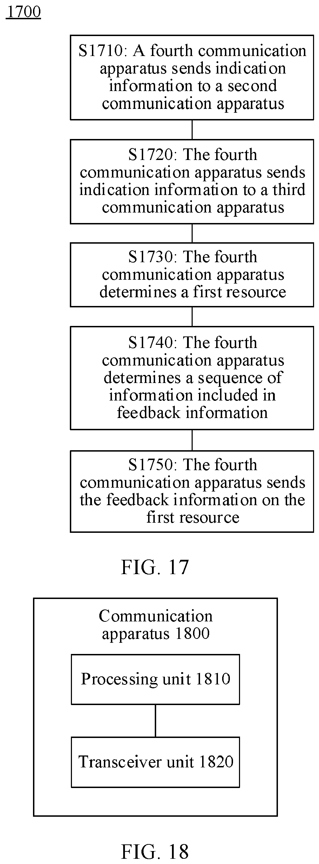

Based on the method shown in FIG. 13, alternatively, as shown in FIG. 17, a communication method provided in an embodiment of the application may be described from a perspective of a fourth communication apparatus.

S1710: The fourth communication apparatus sends indication information to a second communication apparatus.

S1720: The fourth communication apparatus sends indication information to a third communication apparatus.

S1730: The fourth communication apparatus determines a first resource.

S1740: The fourth communication apparatus determines a sequence of information included in feedback information. It should be understood that this step helps the fourth communication apparatus correctly interpret the feedback information.

S1750: The fourth communication apparatus receives and sends the feedback information on the first resource.

The foregoing steps are similar to the foregoing content, and details are not described herein again.

It should be noted that there is no limitation on a sequence of performing the foregoing step S1710 and step S1720. Step S1710 may be performed before step S1720; or step S 1720 may be performed before step S1710; or step S1710 and step S 1720 are simultaneously performed. This is not limited.

It should be noted that there is no limitation on a sequence of performing the foregoing step S1730 and step S1710/step S1720. Step S1730 may be performed before step S1710/step S1720; or step S1710/step S1720 may be performed before step S1730; or step S1730 and step S1710/step S1720 are simultaneously performed. This is not limited.

It should be noted that there is no limitation on a sequence of performing the foregoing step S1740 and step S1750. Step S1740 may be performed before step S1750; or step S1750 may be performed before step S1740; or step S1740 and step S1750 are simultaneously performed. This is not limited.

FIG. 18 is a schematic diagram of a structure of a communication apparatus 1800 according to an embodiment of the application. The communication apparatus 1800 may be a terminal or a network device, may be an apparatus in the terminal device or the network device, or may be an apparatus that can be used together with the terminal device or the network device. In a possible implementation, the communication apparatus 1800 may include modules or units that are in one-to-one correspondence with the methods/operations/steps/actions performed by the first communication apparatus or the second communication apparatus in the foregoing method embodiments. The unit may be implemented by a hardware circuit, software, or a combination of a hardware circuit and software. In a possible implementation, the communication apparatus 1800 includes a processing unit 1810 and a transceiver unit 1820. It should be understood that the communication apparatus shown in FIG. 18 is merely an example, and may further include another unit, or include a unit with a function similar to that of each unit in FIG. 18, or may not necessarily include all units in FIG. 18.

It should be noted that the processing unit in the embodiment of the application may also be referred to as a processing module, and the transceiver unit may also be referred to as a transceiver unit (module).

For example, the communication apparatus 1800 may correspond to the terminal device (the first communication apparatus) in the foregoing embodiment, and have any function of the terminal device in the method. The following describes the units of the terminal device.

The processing unit 1810 is configured to determine a first resource.

The transceiver unit 1820 is configured to send feedback information on the first resource, where the feedback information includes feedback information of at least two communication links, the at least two communication links include a first communication link and a second communication link, the first communication link is a communication link between the first communication apparatus and the second communication apparatus, and the second communication link is a communication link between the first communication apparatus and a third communication apparatus.

The processing unit 1810 is further configured to determine a sequence of information included in the feedback information.

The transceiver unit 1820 is further configured to receive information about the at least two communication links.

For example, the communication apparatus 1800 may alternatively correspond to the network device (the second communication apparatus) in the foregoing embodiment, and have any function of the network device in the method. The following describes the units of the terminal device.

The processing unit 1810 is configured to determine a first resource.

The transceiver unit 1820 is configured to receive feedback information on the first resource, where the feedback information includes feedback information of at least two communication links, the at least two communication links include a first communication link and a second communication link, the first communication link is a communication link between the second communication apparatus and the first communication apparatus, and the second communication link is a communication link between the first communication apparatus and a third communication apparatus.

The transceiver unit 1820 is further configured to send information about the first communication link. The transceiver unit 1820 is further configured to indicate the third communication apparatus to send information about the second communication link.

The processing unit 1810 is configured to implement a processing operation performed by the network device in the embodiment shown in FIG. 2, and the transceiver unit 1820 is configured to implement a receiving operation and a sending operation performed by the network device in the embodiment shown in FIG. 2. Details are not described herein.

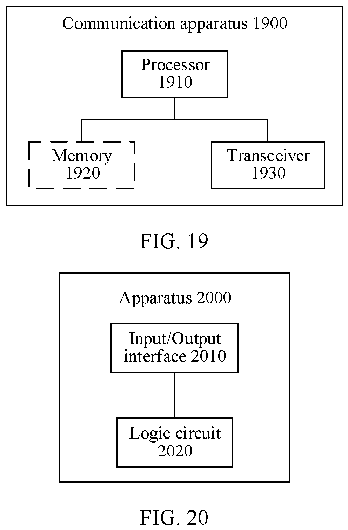

FIG. 19 shows a communication apparatus 1900 according to an embodiment of the application. The communication apparatus 1900 may be the terminal device (the first communication apparatus) in FIG. 2, or may be the network device (the second communication apparatus) in FIG. 2. The apparatus may include a processor 1910 and a transceiver 1930. The apparatus may include a processor 1910 and a transceiver 1930. The transceiver may include a transmitter and/or a receiver. Optionally, the apparatus may further include a memory 1920. The processor 1910, the transceiver 1930, and the memory 1920 communicate with each other by using an internal connection path. A related function implemented by the processing unit 1010 in FIG. 18 may be implemented by the processor 1910, and a related function implemented by the transceiver unit 1820 may be implemented by the processor 1910 by controlling the transceiver 1930.

Optionally, the processor 1910 may be a CPU, a microprocessor, an ASIC, a special-purpose processor, or one or more integrated circuits configured to perform the technical solutions in embodiments of the application. Alternatively, the processor may refer to one or more devices, circuits, and/or processing cores configured to process data (for example, computer program instructions). For example, the processor may be a baseband processor or a central processing unit. The baseband processor may be configured to process a communication protocol and communication data. The central processing unit may be configured to: control a communication apparatus (for example, a network device, a terminal, or a chip), execute a software program, and process data of the software program.

Optionally, the processor 1910 may include one or more processors, for example, include one or more CPUs. When the processor is one CPU, the CPU may be a single-core CPU or a multi-core CPU.

The transceiver 1930 is configured to send and receive data and/or a signal, and receive data and/or a signal. The transceiver may include a transmitter and a receiver. The transmitter is configured to send data and/or a signal, and the receiver is configured to receive data and/or a signal.

The memory 1920 includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory 1920 is configured to store related instructions and data. The memory 1920 is configured to store a computer program or instructions and data of the network device, and may be an independent device or integrated into the processor 1910.

Specifically, the processor 1910 is configured to control the transceiver to perform information transmission with the terminal. For details, refer to the descriptions in the foregoing method embodiments. Details are not described herein again.

During specific implementation, in an embodiment, the communication apparatus 1900 may further include an output device and an input device. The output device communicates with the processor 1910, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector. The input device communicates with the processor 1910, and may receive an input from a user in a plurality of manners. For example, the input device may be a mouse, a keyboard, a touchscreen device, or a sensing device.

It may be understood that FIG. 19 shows only a simplified design of the communication apparatus. During actual application, the apparatus may further separately include other necessary components, including but not limited to any quantity of transceivers, processors, controllers, memories, and the like, and all terminals that can implement the application shall fall within the protection scope of the application.

In a possible design, the apparatus 1900 may be a chip, for example, may be a communication chip that can be used in a terminal device or a network device, and configured to implement a related function of the processor 1910 in the terminal device or the network device. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store a computer program or instructions. When the program or the instructions are executed, the processor is enabled to implement a corresponding function.

As shown in FIG. 20, an embodiment of the application further provides an apparatus 2000, which may be configured to implement functions of the first communication apparatus, the second communication apparatus, the third communication apparatus, and the fourth communication apparatus in the foregoing method. The apparatus 2000 may be a communication apparatus or a chip in the communication apparatus. The communication apparatus includes:
at least one input/output interface 2010 and a logic circuit 2020. The input/output interface 2010 may be an input/output circuit, an input interface, an output interface, or the like. The logic circuit 2020 may be a signal processor, a chip, or another integrated circuit that can implement the method in the application.

The at least one input/output interface 2010 is configured to input or output a signal or data. For example, when the apparatus is the first communication apparatus, the input/output interface 2010 is configured to receive first information and second information, or send feedback information. For example, when the apparatus is the second communication apparatus, the input/output interface 2010 is configured to output first information or receive feedback information. For example, when the apparatus is the third communication apparatus, the input/output interface 2010 is configured to output second information. For example, when the apparatus is the fourth communication apparatus, the input/output interface 2010 is configured to output indication information or receive feedback information.

The logic circuit 2020 is configured to perform a part or all of the steps in any one of the methods provided in embodiments of the application. For example, when the apparatus is the first communication apparatus, the apparatus is configured to perform the steps performed by the first communication apparatus in the possible implementations in the foregoing method embodiments. For example, the logic circuit 2020 is configured to perform sensing based on the first information and the second information to obtain a sensing result. When the apparatus is the second communication apparatus, the apparatus is configured to perform the steps performed by the second communication apparatus in the possible implementations in the foregoing method embodiments. For example, the logic circuit 2020 is configured to obtain the feedback information. When the apparatus is the fourth communication apparatus, the apparatus is configured to perform the steps performed by the fourth communication apparatus in the possible implementations in the foregoing method embodiments. For example, the logic circuit 2020 is configured to obtain the feedback information.

An embodiment of the application further provides an apparatus. The apparatus may be a terminal device or a network device, or may be a logical circuit. The apparatus may be configured to perform an operation performed by the terminal device or the network device in the foregoing method embodiments.

An embodiment of the application further proposes a computer-readable storage medium. The computer-readable storage medium stores one or more programs or instructions. When the program or the instructions are run on a computer, the computer is enabled to perform the methods in the foregoing embodiments.

An embodiment of the application further proposes a computer program. The computer program includes a program or instructions. When the computer program or the instructions are executed by a computer, the computer is enabled to perform a corresponding procedure of the methods in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

It should be understood that "one embodiment" or "an embodiment" mentioned in the entire specification means that particular features, structures, or characteristics related to the embodiment are included in at least one embodiment of the application. Therefore, "in one embodiment" or "in an embodiment" appearing throughout the specification does not necessarily refer to a same embodiment. In addition, the particular features, structures, or characteristics may be combined in one or more embodiments in any appropriate manner. It should be understood that sequence numbers of the foregoing processes do not mean execution sequences in various embodiments of the application. The execution sequences of the processes should be determined according to functions and internal logic of the processes, and should not be construed as any limitation on the implementation processes of embodiments of the application.

It should be further understood that "first", "second", and various numbers in this specification are merely used for differentiation for ease of description, and are not construed as a limitation on the scope of embodiments of the application.

In the several embodiments provided in the application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of the application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of the application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of the application. The foregoing storage medium includes any medium that can store program code, such as a USB flash drive, a removable hard disk, a ROM, a RAM, a magnetic disk, or an optical disc.

The foregoing descriptions are merely specific implementations of the application, but are not intended to limit the protection scope of the application. Any variation or replacement readily figured out by a person skilled in the art within the technical scope disclosed in the application shall fall within the protection scope of the application. Therefore, the protection scope of the application shall be subject to the protection scope of the claims.

## Claims

1. A communication method, comprising:
determining, by a first communication apparatus, a first resource; and
sending, by the first communication apparatus, feedback information on the first resource, wherein the feedback information comprises feedback information of at least two communication links, the at least two communication links comprise a first communication link and a second communication link, the first communication link is a communication link between the first communication apparatus and a second communication apparatus, and the second communication link is a communication link between the first communication apparatus and a third communication apparatus.

2. The communication method according to claim 1, wherein the method further comprises:
determining, by the first communication apparatus, a sequence of information comprised in the feedback information.

3. The communication method according to claim 1 or 2, wherein before the sending, by the first communication apparatus, feedback information on the first resource, the method further comprises:
receiving, by the first communication apparatus, information about the at least two communication links.

4. A communication method, comprising:
determining, by a second communication apparatus, a first resource; and
receiving, by the second communication apparatus, feedback information on the first resource, wherein the feedback information comprises feedback information of at least two communication links, the at least two communication links comprise a first communication link and a second communication link, the first communication link is a communication link between the second communication apparatus and a first communication apparatus, and the second communication link is a communication link between the first communication apparatus and a third communication apparatus.

5. The communication method according to claim 4, wherein before the receiving, by the second communication apparatus, feedback information on the first resource, the method further comprises:
sending, by the second communication apparatus, information about the first communication link; and
indicating, by the second communication apparatus, the third communication apparatus to send information about the second communication link.

6. The communication method according to any one of claims 1 to 5, wherein the sequence of the information comprised in the feedback information is determined based on at least one of the following information:
first identifiers, priorities of link types, and time domain resources of information about the at least two communication links.

7. The communication method according to claim 6, wherein the first identifier comprises at least one of the following identifiers:
identifiers of the information about the at least two communication links, identifiers of the at least two communication links, an identifier of the second communication apparatus, an identifier of the third communication apparatus, and an identifier of a carrier.

8. The communication method according to claim 6 or 7, wherein
when the first identifiers are the same, the sequence of the information comprised in the feedback information is determined based on the priorities of the link types and/or the time domain resources of the information about the at least two communication links; or
when the first identifiers and/or the priorities of the link types are the same, the sequence of the information comprised in the feedback information is determined based on the time domain resources of the information about the at least two communication links.

9. The communication method according to claim 7, wherein
the sequence of the information comprised in the feedback information is determined based on a first sequence and the identifiers of the information about the at least two communication links, the first sequence is determined based on a second sequence and the identifiers of the at least two communication links, and the second sequence is determined based on the identifier of the carrier; or
the sequence of the information comprised in the feedback information is determined based on a first sequence and the identifiers of the information about the at least two communication links, the first sequence is determined based on a second sequence and the identifier of the carrier, and the second sequence is determined based on the identifiers of the at least two communication links.

10. The communication method according to any one of claims 1 to 9, wherein the information about the at least two communication links comprises a first reference signal of the first communication link and a second reference signal of the second communication link, the feedback information comprises channel state information, and the channel state information comprises first channel state information determined based on the first reference signal and second channel state information determined based on the second reference signal; and/or
the information about the at least two communication links comprises first data of the first communication link and second data of the second communication link, the feedback information comprises data response information, and the data response information comprises first data response information of the first data and second data response information of the second data.

11. The communication method according to claim 10, wherein
the feedback information comprises a first information block and a second information block, the first channel state information and the second channel state information are located in the first information block, and the first data response information and the second data response information are located in the second information block; or
the feedback information comprises a third information block and a fourth information block, the first channel state information and the first data response information are located in the third information block, and the second channel state information and the second data response information are located in the fourth information block.

12. A communication apparatus, comprising:
a processing unit, configured to determine a first resource; and
a transceiver unit, configured to send feedback information on the first resource, wherein the feedback information comprises feedback information of at least two communication links, the at least two communication links comprise a first communication link and a second communication link, the first communication link is a communication link between a first communication apparatus and a second communication apparatus, and the second communication link is a communication link between the first communication apparatus and a third communication apparatus.

13. The communication apparatus according to claim 12, wherein the processing unit is further configured to determine a sequence of information comprised in the feedback information.

14. The communication apparatus according to claim 12 or 13, wherein the transceiver unit is further configured to: before sending the feedback information on the first resource, receive information about the at least two communication links.

15. A communication apparatus, comprising:
a processing unit, configured to determine a first resource; and
a transceiver unit, configured to receive feedback information on the first resource, wherein the feedback information comprises feedback information of at least two communication links, the at least two communication links comprise a first communication link and a second communication link, the first communication link is a communication link between a second communication apparatus and a first communication apparatus, and the second communication link is a communication link between the first communication apparatus and a third communication apparatus.

16. The communication apparatus according to claim 15, wherein the transceiver unit is further configured to: before receiving the feedback information on the first resource, send information about the first communication link; and
the transceiver unit is further configured to indicate the third communication apparatus to send information about the second communication link.

17. The communication apparatus according to any one of claims 12 to 16, wherein the sequence of the information comprised in the feedback information is determined based on at least one of the following information: first identifiers, priorities of link types, and time domain resources of information about the at least two communication links.

18. The communication apparatus according to claim 17, wherein the first identifier comprises at least one of the following identifiers:
identifiers of the information about the at least two communication links, identifiers of the at least two communication links, an identifier of the second communication apparatus, an identifier of the third communication apparatus, and an identifier of a carrier.

19. The communication apparatus according to claim 17 or 18, wherein that the sequence of the information comprised in the feedback information is determined based on at least one of the following information comprises:
when the first identifiers are the same, the sequence of the information comprised in the feedback information is determined based on the priorities of the link types and/or the time domain resources of the information about the at least two communication links; or
when the first identifiers and/or the priorities of the link types are the same, the sequence of the information comprised in the feedback information is determined based on the time domain resources of the information about the at least two communication links.

20. The communication apparatus according to claim 18, wherein
the sequence of the information comprised in the feedback information is determined based on a first sequence and the identifiers of the information about the at least two communication links, the first sequence is determined based on a second sequence and the identifiers of the at least two communication links, and the second sequence is determined based on the identifier of the carrier; or
the sequence of the information comprised in the feedback information is determined based on a first sequence and the identifiers of the information about the at least two communication links, the first sequence is determined based on a second sequence and the identifier of the carrier, and the second sequence is determined based on the identifiers of the at least two communication links.

21. The communication apparatus according to any one of claims 12 to 20, wherein the information about the at least two communication links comprises a first reference signal of the first communication link and a second reference signal of the second communication link, the feedback information comprises channel state information, and the channel state information comprises first channel state information determined based on the first reference signal and second channel state information determined based on the second reference signal; and/or
the information about the at least two communication links comprises first data of the first communication link and second data of the second communication link, the feedback information comprises data response information, and the data response information comprises first data response information of the first data and second data response information of the second data.

22. The communication apparatus according to claim 21, wherein
the feedback information comprises a first information block and a second information block, the first channel state information and the second channel state information are located in the first information block, and the first data response information and the second data response information are located in the second information block; or
the feedback information comprises a third information block and a fourth information block, the first channel state information and the first data response information are located in the third information block, and the second channel state information and the second data response information are located in the fourth information block.

23. A communication apparatus, comprising a processor coupled to a memory, wherein the memory is configured to store a computer program, and the processor is configured to run the computer program, to enable the communication apparatus to perform the method according to any one of claims 1 to 3 and 6 to 11, or enable the communication apparatus to perform the method according to any one of claims 4 to 11.

24. The communication apparatus according to claim 23, further comprising one or more of the memory and a transceiver, wherein the transceiver is configured to receive a signal and/or send a signal.

25. A computer-readable storage medium, wherein the computer-readable storage medium comprises a computer program or instructions, and when the computer program or the instructions are run on a computer, the method according to any one of claims 1 to 3 and 6 to 11 is performed, or the method according to any one of claims 4 to 11 is performed.

26. A computer program product, wherein the computer program product comprises a computer program or instructions, and when the computer program or the instructions are run on a computer, the method according to any one of claims 1 to 3 and 6 to 11 is performed, or the method according to any one of claims 4 to 11 is performed.

27. A communication system, comprising a communication apparatus configured to perform the method according to any one of claims 1 to 3 and 6 to 11 and a communication apparatus configured to perform the method according to any one of claims 4 to 11.
